(19) Europäisches Patentamt / European Patent Office / Office européen des brevets

(11) **EP 3 821 508 B1**

(12) **EUROPÄISCHE PATENTSCHRIFT**

(45) Veröffentlichungstag und Bekanntmachung des Hinweises auf die Patenterteilung:
**06.09.2023 Patentblatt 2023/36**

(21) Anmeldenummer: **18752853.4**

(22) Anmeldetag: **11.07.2018**

(51) Internationale Patentklassifikation (IPC):
*H02G 1/12* (2006.01)  *G01N 27/22* (2006.01)
*H01H 1/00* (2006.01)

(52) Gemeinsame Patentklassifikation (CPC):
**H02G 1/1265; H02G 1/1248**

(86) Internationale Anmeldenummer:
**PCT/IB2018/055117**

(87) Internationale Veröffentlichungsnummer:
**WO 2020/065366 (02.04.2020 Gazette 2020/14)**

(54) **EINRICHTUNG ZUR ERKENNUNG DER BERÜHRUNG EINES ELEKTRISCHEN LEITERS, VERFAHREN ZUR ERKENNUNG DER BERÜHRUNG EINES ELEKTRISCHEN LEITERS, ABISOLIERMASCHINE MIT EINER DERARTIGEN EINRICHTUNG**

DEVICE FOR IDENTIFYING CONTACT WITH AN ELECTRICAL CONDUCTOR, METHOD FOR IDENTIFYING CONTACT WITH AN ELECTRICAL CONDUCTOR, INSULATION-STRIPPING MACHINE COMPRISING A DEVICE OF THIS KIND

DISPOSITIF DE DÉTECTION D'UN CONTACT AVEC UN CONDUCTEUR ÉLECTRIQUE, PROCÉDÉ DE DÉTECTION D'UN CONTACT AVEC UN CONDUCTEUR ÉLECTRIQUE, ET MACHINE À DÉNUDER MUNIE DUDIT DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.05.2021 Patentblatt 2021/20**

(73) Patentinhaber: **Schleuniger AG**
**3608 Thun (CH)**

(72) Erfinder:
• **BERGER, Patrick**
**3705 Faulensee (CH)**

• **DESCHLER, Raphael**
**3653 Oberhofen (CH)**
• **JOST, Michael**
**3600 Thun (CH)**

(74) Vertreter: **PPR AG**
**BGZ**
**Rotenbodenstrasse 12**
**9497 Triesenberg (LI)**

(56) Entgegenhaltungen:
**WO-A1-2014/147596**

**Beschreibung**

Die Erfindung betrifft eine Einrichtung zur Erkennung der Berührung eines elektrischen Leiters durch zumindest ein elektrisch leitfähiges Werkzeug, ein Verfahren zur Erkennung der Berührung eines elektrischen Leiters durch zumindest ein elektrisch leitfähiges Werkzeug sowie eine Abisoliermaschine mit zumindest einer Einrichtung zur Erkennung der Berührung eines elektrischen Leiters durch zumindest ein elektrisch leitfähiges Werkzeug gemäss des unabhängigen Anspruchs 1.

Aufgrund der steigenden Anforderungen an die Qualität elektrischer Kabel für beispielsweise die Automobil- oder Luftfahrtindustrie werden zunehmend kleinste Verletzungen des Leiters wie Kratzer oder Einschnitte als Risiko betrachtet, da diese Verletzungen zusammen mit Vibrations- und/oder Korrosionseinfluss zum Bruch des Leiters führen können. Daher wurden für kabelverarbeitende Maschinen bereits einige Vorschläge zur Erkennung der Werkzeug-Leiter-Berührung gemacht. Bei Kabelabisoliermaschinen entspricht das Werkzeug meistens einem Messer.

Aus dem Stand der Technik sind unterschiedliche Vorrichtungen und Verfahren zum Abisolieren von elektrischen Leitern bekannt geworden.

So zeigt beispielsweise die EP 3 163 696 A1 eine rotative Abisoliermaschine zum Entfernen wenigstens einer Lage der Umhüllung von elektrischen Leitern. Dabei handelt es sich um eine Einrichtung mit rotativ einschneidenden Abisoliermessern. Rotative Abisoliermaschinen sind Abisoliermaschinen, bei denen sich die Abisoliermesser um die Längsachse des abzuisolierenden Leiters drehen.

Aus der WO 2014/147596 A1 ist eine Vorrichtung zur Erkennung der Berührung eines elektrischen Leiters durch ein nicht rotierendes Werkzeug als Abisoliermesser bekannt geworden. Bei dieser Vorrichtung ist das Abisoliermesser direkt über elektrische Leiter mit einer Schaltungseinrichtung zur Messer-Leiter-Berührungsdetektion verbunden. Diese Vorrichtung ist für einen rotativen Abisolierkopf in der bekannten Form nicht verwendbar.

EP3121918A1 nutzt die kapazitive Kopplung zur analogen Mess-Signalübertragung. Diese Einrichtung ist mit wesentlichen Einschränkungen verbunden. Die mechanische Umsetzung der konzentrischen Kondensatorringe mit dem Luftspalt muss sehr genau ausgeführt sein, damit während dem Abisolierprozess keine unzulässigen Kapazitätsschwankungen auftreten, welche als falsche Messer-Leiter-Berührungen interpretiert würden. Ein weiterer Nachteil der in EP3121918A1 beschriebenen kapazitiven Kopplung ist, dass durch die grossen Grundkapazitäten der stationären und bewegten Vorrichtungteile die Sensitivität stark eingeschränkt ist, wodurch die Messer-Leiter-Detektion von kurzen Kabeln mit kleinen Querschnitten erschwert oder verunmöglicht wird.

Es ist Aufgabe der vorliegenden Erfindung, einen oder mehrere Nachteile des Standes der Technik zu beheben. Insbesondere soll eine möglichst einfache Einrichtung, ein Verfahren und eine Abisoliervorrichtung bereitgestellt werden, die es ermöglichen, die Berührung eines abzuisolierenden elektrischen Leiters durch zumindest ein elektrisch leitfähiges Werkzeug zuverlässig zu erkennen. Es ist insbesondere eine Aufgabe der vorliegenden Erfindung, eine rotativ schneidende Abisoliermaschine, die das einfache und zuverlässige Abisolieren von elektrischen Leitern ermöglicht, insbesondere mit einer Einrichtung zur zuverlässigen und sensitiven Messer-Leiter-Berührungs-Detektion zur Verfügung zu stellen, um so die Verletzungen von elektrischen Leitern bei einem Abisoliervorgang zu minimieren und/oder diese zumindest zuverlässig anzuzeigen.

Diese Aufgabe wird durch die in den unabhängigen Patentansprüchen definierte Einrichtung und Verfahren gelöst. Weitere Ausführungsformen ergeben sich aus den abhängigen Patentansprüchen.

Eine erfindungsgemässe Einrichtung zur Erkennung der Berührung eines, insbesondere mit einer elektrisch nichtleitenden Umhüllung versehenen, elektrischen Leiters durch zumindest ein elektrisch leitfähiges, um den elektrischen Leiter rotierendes Werkzeug umfasst einen um eine Rotationsachse rotativ gelagerten Werkzeughalter. Rotativ gelagert heisst hier und im Folgenden, dass eine Drehung des Werkzeughalters in beliebiger Richtung und einem beliebigen Winkel von 0 bis unendlich Grad um die Rotationsachse möglich ist. Das Werkzeug ist an diesem Werkzeughalter angeordnet. Die Einrichtung umfasst einen elektrisch leitfähigen Körper, welcher an dem Werkzeughalter angeordnet ist. Vorzugsweise umfasst der elektrisch leitfähige Körper den Werkzeughalter und eine Hohlwelle. Der elektrisch leitfähige Körper ist gegenüber dem Werkzeug elektrisch isoliert, insbesondere durch eine elektrische Isolierung. Die Einrichtung umfasst zudem ein rotorseitiges Induktivelement, welches am Werkzeughalter oder an der Hohlwelle angeordnet ist und einen Parallelschwingkreis mit zumindest einem rotorseitigen Teilkreis und zumindest einem statorseitigen Teilkreis. Die Einrichtung umfasst eine Schaltungsanordnung und ein statorseitiges Induktivelement. Das rotorseitige Induktivelement ist über elektrische Leiter mit dem Werkzeug und zumindest mit dem elektrisch leitfähigen Körper elektrisch verbunden. Alle diese Elemente bilden Elemente des rotorseitigen Teilkreises des Parallelschwingkreises. Zumindest das statorseitige Induktivelement ist im statorseitigen Teilkreis des Parallelschwingkreises angeordnet. Die stator- und rotorseitigen Induktivelemente sind miteinander induktiv gekoppelt. Der statorseitige Teilkreis des Parallelschwingkreises ist über elektrische Leiter mit der Schaltungsanordnung zur Ermittlung der Änderung zumindest eines charakteristischen Schwingungsparameters, insbesondere der Phasenlage und/oder der Phasenverschiebung des Parallelschwingkreises, verbunden. Der Parallelschwingkreis weist eine Gesamtkapazität auf, die funktionell zumindest die Werkzeugkapazität umfasst. Je nach Schaltungsaufbau umfasst die Gesamtkapazität zudem die Leiterkapazität der elektrischen Leiter des rotorseitigen Teilkreises, und/oder die Leiterkapazität der elektrischen Leiter des statorseitigen Teilkreises und/oder eine Ausgangskapazität der Schaltungsanordnung und/oder einer zusätzlichen rotorseitigen Abgleichskapazität. Es ist möglich, dass weitere Streukapazitäten und parasitäre Kapazitäten Einfluss auf die Gesamtkapazität haben und diese berücksichtigt werden müssen. Durch eine entsprechende Auswahl der elektrischen Leiter und/oder einer zusätzlichen Ausgangskapazität und/oder einer zusätzlichen rotorseitigen Abgleichskapazität kann die Gesamtkapazität auf gewünschte Anfangswerte eingestellt und die Teilkreise aufeinander abgestimmt werden. Die Abstimmung der Resonanzfrequenzen von rotor- und statorseitigem Teilkreis ist insbesondere bei kleinem Kopplungsfaktor der Induktivelemente vorteilhaft.

Das rotorseitige Induktivelement und das statorseitige Induktivelement sind zueinander beabstandet und berührungslos, derart zueinander angeordnet, dass unabhängig oder in einer definierten Funktion abhängig von der Rotationsgeschwindigkeit des Werkzeughalters gegenüber der Schaltungsanordnung zumindest einer der charakteristischen Schwingungsparameter des Parallelschwingkreises messbar ist. Charakteristische Schwingungsparameter sind beispielsweise die Amplitude, die Frequenz und/oder die Phasenverschiebung zwischen einem Eingangs- und einem Ausgangssignal, wie beispielsweise zwischen einem Frequenzgenerator- und einem statorseitigem Schwingkreissignal.

Die elektrischen Leiter zur Verbindung mit dem Werkzeug können Kabel sein. Es ist aber auch vorstellbar, dass es sich lediglich um Leiterbahnen, beispielsweise auf einer Leiterplatte, oder um elektrische Verbindungen durch Löten, Stecken, Nieten, Verstiften oder Verschrauben handelt. Falls es sich bei den elektrischen Verbindungen um Kabel handelt, können diese beispielsweise mit dem Werkzeug über Kabelschuhe gesteckt oder verschraubt verbunden sein.

Zumindest das Werkzeug, die elektrische Isolierung, der elektrisch leitfähige Körper, die elektrischen Leiter des rotorseitigen Teilkreises mit deren Kapazitäten und das rotorseitige Induktivelement, sind Elemente des rotorseitigen Teilkreises. Zu den Elementen des statorseitigen Teilkreises gehören vorzugsweise das statorseitige Induktivelement, die elektrischen Leiter des statorseitigen Teilkreises mit deren Kapazitäten sowie die Schaltungsanordnung.

Die Elemente des rotorseitigen Teilkreises des Parallelschwingkreises sind am rotativ gelagerten Werkzeughalter angeordnet und die Elemente des statorseitigen Teilkreises des Parallelschwingkreises, insbesondere das statorseitige Induktivelement und die stationäre Schaltungsanordnung, sind vorzugsweise an einem stationären Element der Abisoliermaschine angeordnet.

Der elektrisch leitfähige Körper kann den gesamten Werkzeughalter umfassen. Das heisst, der elektrisch leitfähige Körper ist identisch mit dem Werkzeughalter. Es ist aber ebenso vorstellbar, dass lediglich ein Teil des Werkzeughalters als elektrisch leitfähiger Körper ausgebildet ist und/oder der Werkzeughalter zumindest teilweise aus einem nicht leitenden Werkstoff besteht. Beispiele für nichtleitende Werkstoffe sind Keramik, insbesondere technische Keramik oder Kunststoffe.

Der Werkzeughalter und der elektrisch leitfähige Körper können als separate Elemente ausgebildet sein. So ist es beispielsweise denkbar, dass der elektrisch leitfähige Körper lediglich als Hohlwelle, Ring oder Scheibe am Werkzeughalter ausgebildet ist. Es ist ebenfalls vorstellbar, dass lediglich eine Beschichtung zumindest eines Bereichs des Werkzeughalters als elektrisch leitfähiger Körper vorgesehen ist.

Die elektrische Isolierung zwischen Werkzeug und elektrisch leitfähigem Körper kann dabei beispielsweise als Folie ausgebildet sein, die das Werkzeug zumindest teilweise ummantelt und gegenüber einem Werkzeughalter isoliert, der als elektrisch leitfähiger Körper ausgebildet ist. Es ist ebenfalls möglich, dass die elektrische Isolierung als separates Element ausgebildet ist, welches zwischen dem Werkzeug und dem elektrisch leitfähigen Körper angeordnet ist. Weiter könnte der als elektrisch leitfähiger Körper ausgebildete Werkzeughalter mit einer elektrisch nichtleitenden Beschichtung versehen sein, die als Isolierung dient. Dabei ist es vorstellbar, dass die elektrische Isolierung zumindest als Teil des Werkzeughalters ausgebildet ist, insbesondere in dem Fall, in welchem nur ein Teil des Werkzeughalters als elektrisch leitfähiger Körper ausgebildet ist, oder dass der elektrisch leitfähige Körper als separates Element, wie zum Beispiel als Hohlwelle, ausgebildet ist.

Das elektrisch leitfähige Werkzeug bildet mit seiner Umgebung, insbesondere mit der elektrischen Isolierung und dem elektrisch leitfähigen Körper, oder je nach Ausführungsform mit dem Werkzeughalter, die Werkzeugkapazität innerhalb des rotorseitigen Teilkreises des Parallelschwingkreises.

Der elektrische Leiter und die elektrisch nichtleitende Umhüllung sind typischerweise Teile eines Kabels oder stellen in Summe ein Kabel bereit.

Die wie vorliegend beschriebene Anordnung des rotorseitigen und statorseitigen Teilkreises, die zu einem Parallelschwingkreis gekoppelt sind, ermöglicht es der Einrichtung, Schwingungsparameter des Parallelschwingkreises unabhängig von der Rotationsgeschwindigkeit des Werkzeughalters zu messen.

Das oder die Werkzeuge können als Messer, insbesondere als Abisoliermesser, ausgebildet sein. Vorzugsweise sind die Werkzeuge zwei sich einander gegenüberliegende Abisoliermesser, die V-förmig ausgebildet sind und sich, insbesondere im geschlossenen Zustand, überlappen. Ebenso ist es vorstellbar, dass die sich gegenüberliegenden Messer je eine gerade Schneidkante aufweisen, die sich im geschlossenen Zustand der Messer treffen. Es ist vorstellbar, mehr als zwei Messer zu verwenden. Eine Anordnung mehrerer Messer in der Form einer Irisblende ist vorstellbar.

Das rotorseitige und das statorseitige Induktivelement sind als Spulen ausgebildet, wobei diese Spulen induktiv miteinander gekoppelt sind. Spulen sind einfach herzustellende Bauelemente. Durch die induktive Koppelung können Signale berührungslos übertragen werden.

Änderungen der Eigenschaften, insbesondere der Impedanz des rotorseitigen Teilkreises durch eine Berührung von Werkzeug und Leiter wirken sich direkt auf den gesamten Parallelschwingkreis aus. Dies ermöglicht eine berührungslose Auswertung des rotorseitigen Teilkreises durch die stationäre Schaltungsanordnung mithilfe der charakteristischen Schwingungsparameter des Parallelschwingkreises, insbesondere der Phasenverschiebung.

Die wie vorliegend beschriebene induktive Koppelung innerhalb eines Parallelschwingkreises ermöglicht es, ein Signal zu detektieren und zu übermitteln, ohne dass dieses vor oder während der induktiven Koppelung aufwändig moduliert oder umgewandelt werden muss.

Das rotorseitige und das statorseitige Induktivelement sind, koaxial zur Rotationsachse des Werkzeughalters angeordnet und können sich zumindest teilweise überlappen.

Dies ermöglicht es, die Einrichtung kompakt herzustellen und das rotorseitige und das statorseitige Induktivelement zuverlässig aufeinander abzustimmen.

Das statorseitige Induktivelement kann als Ringspule ausgebildet sein. Das rotorseitige Induktivelement kann als eine zu dieser Ringspule koaxiale Ringspule ausgebildet sein. Diese Ringspulen können einander teilweise überlappen. Ringspulen können einfach und mit einer hohen Genauigkeit hergestellt werden. Vorzugsweise überlappen sich die Ringspulen vollständig. Dies begünstigt die induktive Kopplung und ermöglicht eine kompakte Bauform.

Das rotorseitige und das statorseitige Induktivelement weisen eine zylindrische oder eine planparallele Bauform koaxial zur Rotationsachse des Werkzeughalters auf. Dies ermöglicht es, die Vorrichtung in einer gewünschten und auf eine entsprechende Abisoliermaschine abgestimmte Bauweise herzustellen.

Das rotorseitige und/oder das statorseitige Induktivelement können als Wicklung oder als spiralförmiger Aufdruck eines elektrischen Leiters auf einem elektrisch nichtleitenden und nicht magnetischen Werkstoff ausgebildet sein. Der Werkstoff ist vorzugsweise Kunststoff, wie beispielsweise POM, PEEK oder FR4. Dies ermöglicht einen kostengünstigen und einfachen Aufbau der Spulen und Kunststoff beeinflusst das Magnetfeld der Spulen nicht. Ebenfalls ist durch die Ausbildung der Induktivelemente auf einem entsprechenden Werkstoff eine temperaturstabile Kopplung ermöglicht.

Alternativ können das rotorseitige und/oder das statorseitige Induktivelement, insbesondere zur Verbesserung der induktiven Kopplung, einen ferromagnetischen Werkstoff aufweisen. Der ferromagnetische Werkstoff verstärkt und lenkt das elektromagnetische Feld, sodass sich bei gleicher Baugrösse eine grössere Kopplung und Induktivität bei geringem Streufeld ergibt, sodass der Einfluss von magnetisch leitenden Maschinenteilen in der Spulenumgebung stark reduziert wird.

Das rotorseitige und/oder das statorseitige Induktivelement können als einlagige Spule ausgebildet sein. Es ist aber ebenso vorstellbar, dass das rotorseitige und/oder das statorseitige Induktivelement als mehrlagige Spulen ausgebildet sind.

Eine gewünschte kompakte Bauweise und/oder Verbesserung der Kopplung ist damit ermöglicht.

Das Werkzeug kann zwischen zwei leitenden Platten eingebettet sein. Die leitenden Platten sind elektrisch über die elektrischen Leiter mit dem rotorseitigen Induktivelement verbunden. Zudem sind sie gegenüber dem elektrisch leitenden Körper elektrisch isoliert, insbesondere durch die elektrische Isolierung. Dies ermöglicht eine Bereitstellung einer Verbindung zwischen dem Werkzeug und dem rotorseitigen Induktivelement.

Es ist ebenfalls vorstellbar, dass das Werkzeug durch zumindest einen elektrischen Schleifkontakt und über die elektrischen Leiter mit dem rotorseitigen Induktivelement verbunden ist. Der elektrische Schleifkontakt kann dabei durch elektrisch leitende Platten, Federn, Federstifte oder Ringe gebildet sein. Das Werkzeug ist dabei gegenüber dem elektrisch leitenden Körper elektrisch isoliert. Dies ermöglicht eine alternative Bereitstellung einer einfachen elektrischen Verbindung zwischen dem Werkzeug und dem rotorseitigen Induktivelement. Somit kann ein Verändern der Position des Werkzeuges, insbesondere eine Zustellung des Werkzeuges über eine geradlinige Bewegung oder eine Schwenkbewegung realisiert werden kann.

Ein weiterer Aspekt der Erfindung betrifft eine Abisoliermaschine mit zumindest einem Abisoliermesser als Werkzeug. Das Abisoliermesser ist von einem um eine Rotationsachse rotativ gelagerten Werkzeughalter gehalten und mit zumindest einer wie vorliegend beschriebenen Einrichtung zur Erkennung der Berührung eines elektrischen Leiters eines Kabels verbunden. Die Einrichtung ist dabei mit zumindest einem der Werkzeuge verbunden.

Dies ermöglicht das Bereitstellen einer kompletten Abisoliermaschine, wobei die Einrichtung zum Erkennen der Berührung eines elektrischen Leiters entsprechend auf diese Abisoliermaschine eingestimmt ist und die spezifischen Maschinenparameter berücksichtigt.

Wie dem Fachmann bekannt ist, kann die unmittelbare Umgebung eines Parallelschwingkreises, das heisst Elemente die nicht zum Parallelschwingkreis als solches gehören, das Verhalten des Parallelschwingkreises beeinflussen. Dies geschieht, wenn diese peripheren Elemente des Parallelschwingkreises die elektrischen und/oder magnetischen Streufelder des Parallelschwingkreises beeinflussen und verändern. Beim Gesamtaufbau einer Abisoliermaschine ist deshalb darauf zu achten, dass die peripheren Elemente während dem Betrieb der Abisoliermaschine weder die elektrischen noch die magnetischen Streufelder in unzulässigem Mass beeinflussen, um eine unzulässige Verstimmung des Parallelschwingkreises zu verhindern. Eine Verstimmung des Parallelschwingkreises kann zu Fehldetektionen oder Sensitivitätsveränderungen des Messsystems führen. Ein weiterer Aspekt der vorliegenden Erfindung betrifft ein Verfahren zur Erkennung der Berührung eines, insbesondere mit einer elektrisch nichtleitenden Umhüllung versehenen, elektrischen Leiters durch zumindest ein elektrisch leitfähiges, um den elektrischen Leiter rotierendes, Werkzeug, mit 2. einer Einrichtung nach einem der Ansprüche 1 bis 5 oder mit einer Abisoliermaschine nach Anspruch 6.

Das Verfahren zur Erkennung einer Messer-Leiter-Berührung umfasst zumindest die folgenden Schritte:

- Einstellen eines Frequenzgeneratorsignales entsprechend einer definierten Empfindlichkeit im Bereich der Resonanzfrequenz des Parallelschwingkreises, vorzugsweise unterhalb der Resonanzfrequenz des Parallelschwingkreises
- Messen von zumindest einem charakteristischen Schwingungsparameter des Parallelschwingkreises wie Phasenlage, Phase, Frequenz und Amplitude und Festlegen dessen Grenzwertes zur Berührung des Leiters durch das Werkzeug
- Rotieren des Werkzeughalters relativ zur stationären Schaltungsanordnung
- kontinuierliches Messen zumindest dieses charakteristischen Schwingungsparameters des Parallelschwingkreises, insbesondere der Phasenlage und / oder der Phasenverschiebung und kontinuierliches Vergleichen dieser Messwerte mit dem oder den durch Referenzmessungen festgelegten Grenzwert oder Grenzwerten zur Detektion einer Berührung des Leiters durch das Werkzeug. Dabei kann eine kontinuierliche Messung eine permanente Messung oder eine getaktete Messung sein, das heisst eine Vielzahl einzelner Messungen, insbesondere eine Vielzahl gleicher Messungen in einem bestimmten Zeit-Abstand über einen bestimmten Zeitraum.

Dieses Verfahren ist typischerweise Teil eines Prozesses in der Kabelbearbeitung. Dies ermöglicht die Detektion der Berührung eines Leiters durch ein Werkzeug, ohne dass zwischen dem Werkzeug und der Schaltungsanordnung eine galvanische Verbindung notwendig ist.

Vorzugsweise wird die Resonanzfrequenz des Parallelschwingkreises vor der Einstellung des Frequenzgeneratorsignales durch Messen eines Amplituden- und/oder -Frequenzganges innerhalb des Frequenzspektrums ermittelt, in welchem die Resonanzfrequenz systembedingt und/oder erfahrungsgemäss liegen muss. Beim Einstellen des Frequenzgeneratorsignales unterhalb der Resonanzfrequenz des Parallelschwingkreises kann das Frequenzgeneratorsignal je nach Anwendung zwischen 1‰ und 10% liegen, vorzugsweise zwischen 1‰ und 5%, bevorzugt zwischen 5‰ und 1%.

Vorzugsweise wird nach dem Beginn des Rotierens des Werkzeughalters das Werkzeug zu dem Leiter hinbewegt und die elektrisch nichtleitende Umhüllung des Leiters eingeschnitten.

Vorzugsweise wird beim Erreichen oder beim Überschreiten des Grenzwertes ein Signal ausgegeben, mit welchem zumindest eine Funktion einer Abisoliermaschine gesteuert werden kann.

Der Grenzwert kann ein festgelegter Wert sein, der von einem höheren Wert ausgehend zu einem tieferen Wert unterschritten wird oder aber von einem tieferen Wert zu einem höheren Wert überschritten wird. Dabei ist es ebenfalls möglich, dass es sich beim Grenzwert um eine definierte Abweichung von einem konstanten Signal handelt und das Überschreiten dieses letztgenannten Grenzwertes um ein Überschreiten der zulässigen Abweichung von einem Referenzwert handelt.

Es ist dabei natürlich ebenfalls vorstellbar, dass lediglich ein Signal ausgegeben wird, um beispielsweise eine Alarmleuchte zu betätigen oder einen Alarm auszusenden.

Damit ist es möglich, den weiteren Abisolierprozess der Abisoliermaschine oder den weiteren Prozess in Bezug auf die Steuerung der Einrichtung zu steuern und/oder zu regeln, insbesondere eine spezifische Aktion wie zum Beispiel Stoppen der Werkzeugbewegung, Zurückfahren des Werkzeuges, Stoppen einer Drehbewegung des Werkzeughalters etc. zu erwirken.

Typischerweise wird in einem Abisolierprozess in einem ersten Schritt ein abzuisolierender Leiter zwischen die Werkzeuge eingebracht. Sobald sich der abzuisolierende Leiter an entsprechender Position befindet, wird dieser mittels einer geeigneten Vorrichtung gehalten, typischerweise mittels Zentrierbacken. Es ist ebenso vorstellbar, dass der abzuisolierende Leiter zuerst in der geeigneten Vorrichtung gehalten wird und mittels dieser Vorrichtung zwischen die Werkzeuge eingebracht wird. In einem nächsten Schritt werden die Werkzeuge vorzugsweise gegeneinander bewegt und so die elektrisch nichtleitende Umhüllung des Leiters ein- oder aufgeschnitten.

Einer oder mehrere der vorgenannten Prozessschritte des typischen Abisolierprozesses sind vorzugsweise mit dem wie vorliegend beschriebenen Verfahren zur Erkennung einer Leiterberührung kombiniert oder kombinierbar.

Im Anschluss an die vorgenannten Schritte werden die elektrisch leitfähigen Werkzeuge, welche vorzugsweise als Abisoliermesser ausgebildet sind und der Leiter entlang der Rotationsachse, die typischerweise mit der Längsachse des abzuisolierenden Leiters zusammenfällt, relativ zueinander bewegt, derart, dass die eingeschnittene Umhüllung vom Leiter abgezogen wird. Dabei ist es vorstellbar, die Werkzeuge vor dem Abziehen etwas zu öffnen, insbesondere dann, wenn eine Berührung detektiert wurde.

Das Abziehen der Umhüllung kann ganz oder nur teilweise erfolgen. Bei einem Teilabzug verbleibt die Umhüllung noch auf dem elektrischen Leiter, ist aber axial zu ihrer ursprünglichen Lage auf dem elektrischen Leiter versetzt.

Die Messung kann auch während dem Abziehen der Umhüllung fortgeführt werden, sodass auch eine Berührung des elektrischen Leiters durch ein Werkzeug in dieser Phase erkennbar ist.

Vorzugsweise wertet die Schaltungsanordnung die Phasenlage und/oder die Phasenverschiebung zwischen dem statorseitigen Schwingkreissignal und dem Frequenzgeneratorsignal aus.

Die Auswertung der Phasenlage oder der Phasenverschiebung lässt sich mit einem Phasendetektor mit einfachen Mitteln bewerkstelligen und liefert so eine schnelle Antwort im Falle eines Kontaktes zwischen dem Werkzeug und dem elektrischen Leiter.

Die Frequenz des Frequenzgenerators wird beim Initialisieren leicht unterhalb der Eigenfrequenz des Schwingkreises eingestellt, sodass der Schwingkreis gegenüber dem Frequenzgenerator voreilend ist. Berührt jedoch das Werkzeug einen zu bearbeitenden elektrischen Leiter, wird der Schwingkreis durch die zusätzliche kapazitive Last nacheilend. Diese digitale Phasenlagenbestimmung von voreilend oder nacheilend ist robust und schnell. Die Differenz von Schwingkreiseigenfrequenz zu jener des Frequenzgenerators definiert somit die Sensitivität der Schaltungsanordnung.

Eine Auswertung der Schwingkreis-Amplitude oder der Phasenverschiebung zwischen dem statorseitigen Schwingkreissignal und dem Frequenzgeneratorsignal oder eine Kombination ist zur weiteren Erhöhung der Robustheit oder Plausibilitätsprüfung ebenfalls möglich.

Es ist dabei vorstellbar, dass der Zeitpunkt der Berührung des Leiters durch das Werkzeug und die Dauer der Berührung des Leiters durch das Werkzeug als separate Parameter erfasst werden.

Dies ermöglicht insbesondere unter Einbezug weiterer zeitabhängiger Prozessdaten eine Aussage über die Tiefe der Verletzung des Leiters, wenn eine Berührung stattgefunden hat. Es ist damit möglich, den jeweils bearbeiteten Leiter zu kategorisieren. Insbesondere kann durch die gewonnenen Daten beim Einschnitt auf die Leiterverletzungs-Tiefe geschlossen werden und/oder der BerührungsDurchmesser ermittelt und ausgewertet werden.

Ebenfalls vorstellbar ist, dass der Ort der Berührung des Leiters durch das Werkzeug in Richtung der Rotationsachse insbesondere als separater Parameter erfasst wird.

Dies ermöglicht eine Aussage über den Ort, an welchem der Leiter eine Verletzung aufweist, wenn eine Berührung stattgefunden hat. Es ist damit möglich, den jeweils bearbeiteten Leiter zu kategorisieren. Insbesondere kann durch die gewonnenen Daten beim Abzug der Isolation vom Leiter auf die Länge einer Verletzung des Leiters geschlossen werden.

Dabei ist es möglich, zwei oder mehr Parameter gleichzeitig zu erfassen und/oder zu kombinieren.

Mithilfe dieser Informationen kann der Bediener ein oder mehrere Ausschusskriterien definieren. Sollte eine Beschädigung innerhalb akzeptabler Werte liegen, kann der bearbeitete Leiter trotzdem weiterverwendet werden.

Weiter ermöglicht dies eine Aussage darüber, wie viel Prozent der Abisoliervorgänge korrekt ausgeführt wurden, oder wie viel Prozent der abisolierten Leiter beispielsweise eine Beschädigung aufweisen oder aufweisen können und/oder wie massiv die Beschädigung ist.

Während des Verfahrens kann dabei zusätzlich oder alternativ die Stellung der Werkzeuge in Bezug zu einer Ursprungslage der Werkzeuge oder in Bezug zur Rotationsachse erfasst und insbesondere kontinuierlich erfasst werden und im Zeitpunkt der Berührung des Werkzeuges mit dem Leiter mit Referenzwerten verglichen werden. Anhand von Referenzwerten für die Durchmesser kann dabei der Durchmesser des elektrischen Leiters bestimmt werden. Die Bestimmung beispielsweise der Eindringtiefe der Werkzeuge in den Leiter ist dabei ebenfalls erleichtert.

Dies ermöglicht beispielsweise am Anfang eines Abisolierprozesses mit einer Testabisolierung den Leiter zu identifizieren und damit die Maschine zu parametrieren. Ein Anpassen der Parameter während des Betriebes ist dabei ebenfalls möglich. Dies kann nötig sein, wenn die Durchmesser der Leiter Produktionsschwankungen unterliegen.

Aufgrund von Fertigungstoleranzen ist es möglich, dass der elektrische Leiter nicht koaxial zur elektrisch nichtleitenden Umhüllung innerhalb dieser elektrisch nichtleitenden Umhüllung angeordnet ist. Mit anderen Worten, die Dicke der elektrisch nichtleitenden Umhüllung entlang des Umfangs des Leiters kann variieren. Wird ein elektrisch isolierter Leiter, der entsprechenden Fertigungstoleranzen unterliegt, in einer Vorrichtung eingespannt, so ist es möglich, dass der elektrische Leiter innerhalb der Einspannvorrichtung gegenüber dieser nicht auf einer zentralen Achse liegt. Mit Bezug auf eine Abisoliermaschine heisst dies, dass der elektrische Leiter exzentrisch zur Rotationsachse angeordnet ist.

Es ist auch denkbar, dass die Rotationsachse der Werkzeuge und die zentrale Achse der Einspannvorrichtung aufgrund von Fertigungs- und Montagetoleranzen nicht übereinstimmen. Somit ist ein elektrischer Leiter der im Idealfall vollständig koaxial gefertigt ist demnach ebenfalls exzentrisch zur Rotationsachse angeordnet.

Während des Verfahrens, insbesondere während des Einschneidens der elektrisch nichtleitenden Umhüllung kann mit dem Tangentialschnittverfahren ein Exzentrizitätsvektor und der Leiterdurchmesser berechnet werden. Dabei wird zusätzlich oder alternativ der Abstand des Werkzeugs zur Rotationsachse so lange verkleinert, bis eine erste punktuell tangierende Berührung des Leiters durch das Werkzeug entsteht. Dabei kann die Winkelposition des Werkzeugs sowie die Stellung des Werkzeugs abgespeichert werden. Die Stellung des Werkzeuges, im vorliegenden Fall der Abstand des Werkzeuges zur Rotationsachse, entspricht dabei einem zugehörigen ersten Berührungsradius. Dies ermöglicht es, bei einem Leiter, der zur Rotationsachse exzentrisch angeordnet ist, den am weitesten von der Rotationsachse abweichenden Punkt zu bestimmen, und zwar sowohl in Bezug auf einen radialen Abstand zur Rotationsachse als auch in Bezug auf den polaren Winkel.

Vorzugsweise wird im Anschluss der Abstand des Werkzeugs zur Rotationsachse weiter verkleinert, bis eine kontinuierliche Berührung des Leiters durch das Werkzeug während einer ganzen Umdrehung des Werkzeugs um den Leiter auftritt. Dabei kann die Stellung des Werkzeugs, im vorliegenden Fall der radiale Abstand des Werkzeugs zur Rotationsachse als ein zweiter Berührungsradius abgespeichert werden. Dies ermöglicht das Bestimmen eines Punktes des Leiters, der am nächsten zur Rotationsachse angeordnet ist.

Vorzugsweise wird ein Exzentrizitätsvektor aus dem ersten Berührungsradius und dem zweiten Berührungsradius sowie der Winkelposition berechnet. Dies ermöglicht die Berechnung der Position der Längsachse des Leiters gegenüber der Rotationsachse.

Eine weiteres, universelles Verfahren zur Bestimmung eines Exzentrizitätsvektors und eines Leiterradius ist das Sichelschnitt-Verfahren. Dabei wird vorzugsweise ein Abstand des Werkzeuges zur Rotationsachse solange verkleinert, bis eine erste punktuell tangierende Berührung des Leiters durch das Werkzeug entsteht. Zumindest die radiale Stellung und optional auch der Winkel dieser ersten punktuell tangierenden Berührung des Werkzeugs werden abgespeichert. Der Abstand des Werkzeuges zur Rotationsachse wird darüber hinaus bis auf einen Sichelschnittradius verkleinert, bis eine Berührung des Leiters durch das Werkzeug über einen Sichelschnittwinkel von vorzugsweise 120° bis 200° entsteht. Der Beginn der Berührung wird als erster Sichelschnitt-Berührungswinkel und das Ende der Berührung als letzter Sichelschnitt-Berührungswinkel abgespeichert.

Vorzugsweise wird ein Leiterradius, eine Exzentrizität und ein Exzentrizitätsvektor aus dem ersten Berührungsradius, dem Sichelschnittradius, dem ersten Sichelschnitt-Berührungswinkel und dem letzten Sichelschnitt-Berührungswinkel berechnet.

Damit lässt sich die Lage des Leiters in Bezug auf die Rotationsachse bestimmen.

In einem weiteren Schritt kann der Leiter anhand des Exzentrizitätsvektors in Bezug auf die Rotationsachse derart verschoben werden, dass eine Exzentrizität kompensiert wird. Das heisst, die Achse des Leiters ist im nächsten Bearbeitungsschritt koaxial zur Rotationsachse.

Vorzugsweise findet das Verfahren Anwendung mit einer, wie vorliegend beschriebenen, rotativen Kabelabisoliermaschine insbesondere bei Abisoliermaschinen für Koaxial-, Triaxial- oder einfachen Litzenkabeln statt.

Vorzugsweise ist der elektrische Leiter eine elektrisch leitfähige Schicht eines Koaxial- oder Triaxialkabels. Die Schritte wie im vorliegenden Verfahren beschrieben können dabei für einzelne Schichten eines Koaxial- oder Triaxialkabels wiederholt werden. Damit können die Durchmesser und/oder Exzentrizitätsvektoren der einzelnen leitfähigen Schichten bestimmt werden.

Im vorliegenden Verfahren ist es zudem vorstellbar, dass pro Werkzeug der Zeitpunkt der Berührung des Leiters durch das Werkzeug und die Dauer der Berührung des Leiters durch das Werkzeug separat erfasst wird. Dies ermöglicht eine genaue Bestimmung/Kategorisierung der Leiter und/oder der Verletzung der Leiter.

Zudem ist es vorstellbar, dass pro Werkzeug der jeweilige Berührungsdurchmesser berechnet wird. Ausgehend von diesen berechneten Berührungsdurchmessern können die Werkzeuge radial in Bezug auf die Rotationsachse so justiert werden, dass jedes Messer den gleichen Abstand zu einer Längsachse des elektrischen Leiters aufweist. Dabei ist es vorstellbar, dass das Justieren der Werkzeuge im laufenden Betrieb, das heisst, während des Rotierens der Werkzeuge, erfolgt. Es ist jedoch auch vorstellbar, dass die Werkzeuge manuell justiert werden so, dass sie zur Rotationsachse den gleichen Abstand aufweisen.

Ebenfalls vorstellbar ist, dass vorliegendes Verfahren zur Justierung von Rotationsachse und Einspannvorrichtung während der Montage genutzt wird. Dazu kann beispielsweise die Einspannvorrichtung entsprechend des Exzentrizitätsvektors mit Stellschrauben oder Einstellmitteln eingestellt werden und diese dann entsprechend dieser Einstellung fixiert werden.

Ebenso möglich ist eine aktive Korrektur während des Abisolierprozesses, indem die Einspannvorrichtung mit Aktoren gemäss dem Exzentrizitätsvektor verschoben wird.

Anhand von Figuren, welche lediglich Ausführungsbeispiele darstellen, wird die Erfindung im Folgenden näher erläutert. Es zeigen:

Figur 1        eine perspektivische Ansicht einer Abisoliermaschine;

Figur 2        einen Querschnitt längs der Rotationsachse einer Abisoliermaschine;

Figur 2b        der Querschnitt gemäss Figur 2 in einer alternativen Ausführung

Figur 3                ein Schaltbild des Parallelschwingkreises mit Schaltungsanordnung;

Figur 4                ein Ersatzschaltbild für den Parallelschwingkreis gemäss Figur 3;

Figur 5                ein Schaltbild eines Phasendetektors;

Figur 6a bis 6c    einen schematischen Ablauf eines Abisoliervorganges.

Figur 7a bis 7d    einen Querschnitt durch einen Leiter und einen schematischen Ablauf der Korrektur einer Exzentrizität

Figur 8a bis 8b    einen Querschnitt durch einen Leiter und einen schematischen Ablauf der Korrektur einer Exzentrizität

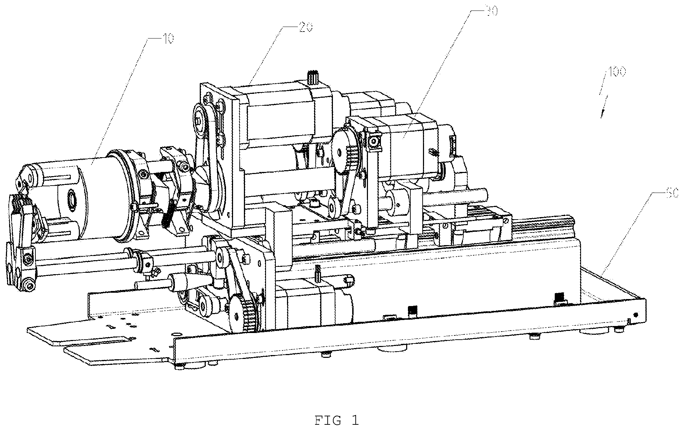

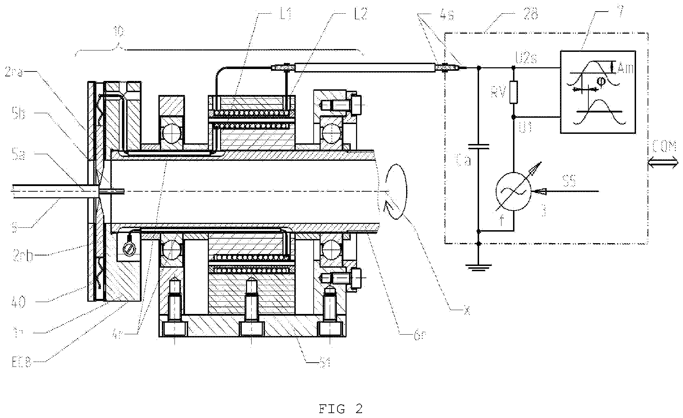

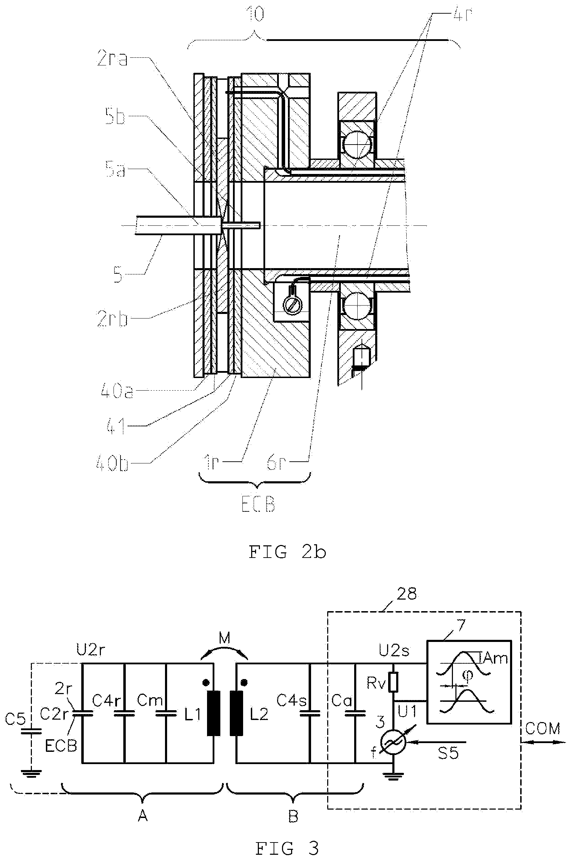

Figur 1 zeigt eine perspektivische Ansicht einer rotativen Abisoliermaschine 100. Die Abisoliermaschine 100 umfasst einen Abisolierkopf 10 mit daran angeordneten Messern 2ra und 2rb (siehe Figur 2), Antriebsmittel 20 für den Abisolierkopf 10 und Antriebsmittel 30 für die Messer des Abisolierkopfes 10. Die Abisoliermaschine 100 weist einen Rahmen 50 auf, auf dem die Bauteile angeordnet sind. Die Abisoliermaschine 100 umfasst eine Einrichtung zur Erkennung der Berührung eines elektrischen Leiters durch zumindest ein elektrisch leitfähiges Werkzeug 2ra, 2rb (siehe Figur 2), auch Messer-Leiter-Berührung genannt.

Die Figur 2 zeigt schematisch einen Querschnitt längs der Rotationsachse X einer rotativen Abisoliermaschine 100 (siehe Fig. 1). Der Abisolierkopf 10 ist vorliegend als Hohlkörper ausgebildet und mit der Hohlwelle 6r verbunden und rotativ um die Rotationsachse X gelagert. Im linken Bereich der Figur 2 befinden sich zwei Messer als elektrisch leitfähige Werkzeuge 2ra, 2rb, zwischen denen der abzuisolierende elektrische Leiter 5b angeordnet ist. Der elektrische Leiter 5b weist eine elektrisch nichtleitende Umhüllung 5a auf. Die Messer 2ra, 2rb sind am rotierbaren Werkzeughalter 1r radial verschiebbar gelagert. Das heisst, die Messer 2ra, 2rb können um die Achse X rotierend aufeinander zu bewegt werden, sodass die elektrisch nichtleitende Umhüllung 5a des elektrischen Leiters 5b eingeschnitten wird. Die Messer 2ra, 2rb sind mit einer elektrischen Isolierung 40 gegenüber dem Werkzeughalter 1r isoliert. Die elektrische Isolierung 40 ist hier aus zwei dünnen Keramikplatten mit je einer Stärke von beispielsweise je 0.5mm ausgebildet, die die Messer umgeben.

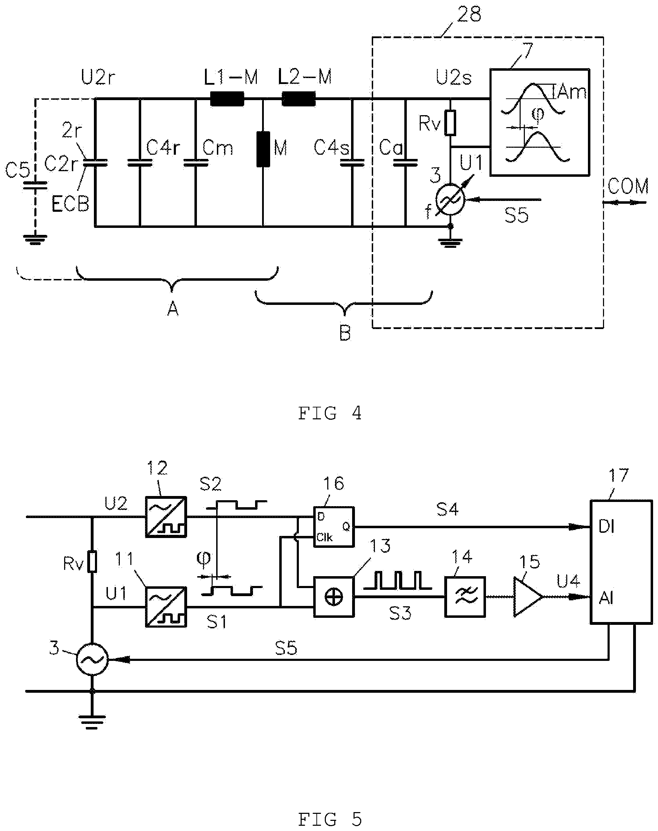

Vorliegend ist der Werkzeughalter 1r als elektrisch leitfähiger Körper ECB ausgebildet. Ein rotorseitiges Induktivelement ist als Spule L1 auf der Hohlwelle 6r angeordnet. Die Spule L1 ist vorliegend als einlagige Spule ausgebildet. Koaxial zu diesem rotorseitigen Induktivelement ist ein statorseitiges Induktivelement angeordnet. Das statorseitige Induktivelement ist vorliegend ebenso als einlagige Spule L2 ausgebildet. Die rotorseitige Spule L1 ist mit einem ihrer Enden über einen elektrischen Leiter 4r mit beiden Messern 2ra, 2rb verbunden. Die Verbindung der Leiter 4r mit den Messern 2ra, 2rb ist vorliegend als Schraubverbindung ausgeführt. Das zweite Ende der Spule L1 ist elektrisch mit dem Werkzeughalter 1r und der Hohlwelle 6r verbunden, welche vorliegend zusammen den elektrisch leitfähigen Körper ECB bilden. Diese Elemente bilden den rotorseitigen Teilkreis A (siehe Figuren 3 und 4) des Parallelschwingkreises. Die statorseitige Spule L2 ist mit ihren Enden über ein Koaxialkabel 4s mit der stationären Schaltungsanordnung 28 verbunden. Die Spule L2 ist an einer Befestigungsplatte 51 als Teil der Abisoliermaschine 100 angeordnet. Das heisst, die statorseitige Spule L2 ist stationär angeordnet. Die rotorseitige Spule L1 und die statorseitige Spule L2 sind zueinander beabstandet angeordnet.

Die stationäre Schaltungsanordnung 28 umfasst einen Frequenzgenerator 3, einen Phasendetektor 7 und einen Vorwiderstand Rv. Der Frequenzgenerator 3 ist über eine Kontrolleinrichtung 17 (siehe Figur 5) über das Signal S5 steuer- oder regelbar. Der Phasendetektor 7 erfasst die Eingangssignale U2s und U1. Zudem befindet sich an der stationären Schaltungsanordnung 28 ein Ausgangskondensator Ca. Über eine Schnittstelle COM kann mit der Schaltungsanordnung 28 kommuniziert werden.

Die Figur 2b zeigt den Querschnitt aus Figur 2 in einer alternativen Ausführung. Gezeigt ist lediglich der vordere Bereich des Abisolierkopfes 10. Dabei bezeichnen gleiche Bezugszeichen gleiche Elemente wie bereits zu Figur 2 beschrieben. Aus Gründen der Übersichtlichkeit werden diese in der Beschreibung der Figur 2b nicht wiederholt und lediglich die Elemente beschrieben, die sich bezüglich der Figur 2 unterscheiden. In der Figur 2b sind die Werkzeuge 2ra und 2rb ebenfalls als Messer ausgebildet. Diese sind je zwischen zwei elektrisch leitenden Platten 41 angeordnet, welche wiederum auf einer elektrischen Isolierung, die als zwei Platten 40a und 40b ausgebildet ist, angeordnet sind. Die Werkzeuge 2ra und 2rb sind vorliegend nicht direkt mit der Spule L1 verbunden, sondern lediglich schleifend mit den elektrisch leitenden Platten 41 verbunden. Die elektrisch leitenden Platten sind mit dem elektrischen Leiter 4r mit der Spule L1 verbunden. Die Verbindung zwischen dem elektrischen Leiter 4r und den elektrisch leitenden Platten 41 als Lötverbindung dargestellt.

Figur 3 zeigt schematisch die Einrichtung zur Erkennung der Berührung eines elektrischen Leiters durch zumindest ein rotierendes elektrisch leitfähiges Werkzeug 2r. Der Parallelschwingkreis ist in einen Teilkreis A und in einen Teilkreis B unterteilt, wobei diese induktiv gekoppelt sind.

Der Parallelschwingkreis ist vorzugsweise ein Parallelschwingkreis hoher Güte. Ein Schwingkreis hoher Güte ist für diese Anwendung typischerweise ein Schwingkreis mit einem Gütefaktor höher als 5.

C2r repräsentiert die Werkzeugkapazität, C4r die rotorseitige und C4s die statorseitige Kabelkapazität. Mit dem Ausgangskondensator Ca der Schaltungsanordnung 28 und dem Abgleichskondensator Cm können die Resonanzfrequenz des Gesamtschwingkreises justiert und vorzugsweise die Resonanzfrequenzen der Teilkreise aufeinander abgeglichen oder ähnlich gewählt werden.

Im vorliegenden Schaltbild repräsentiert die Kapazität C5 die Kapazität des zu bearbeitenden Leiters 5b gegen Erde (siehe dazu die Figur 2).

Der Parallelschwingkreis wird durch den Frequenzgenerator 3 mit einem Frequenzgeneratorsignal U1 über den Vorwiderstand Rv unterhalb seiner Resonanzfrequenz angeregt. Die hier nicht gezeigte Kontrolleinrichtung 17 (siehe dazu die Figur 5) steuert den Frequenzgenerator 3 mit einem Eingangssignal S5 so, dass der Parallelschwingkreis bei offener Messerstellung unterhalb seiner Resonanzfrequenz schwingt.

Berührt eines der Messer beim Einschneiden oder Abziehen der Isolierung 5a den elektrischen Leiter 5b, wird die Kapazität C5 des zu bearbeitenden Kabels parallel zur Schwingkreiskapazität Ct geschaltet.

Damit vergrössert sich die Gesamtkapazität Ct und der LC-Schwingkreis ist verstimmt. Die neu resultierende Resonanzfrequenz mit der Kapazität C5 liegt tiefer als die ursprüngliche Resonanzfrequenz des Parallelschwingkreises. Dabei entsteht bei fixer Frequenz des Frequenzgenerators 3 eine neue Phasenverschiebung zwischen dem Frequenzgeneratorsignal U1 und dem statorseitigen Schwingkreissignal U2s, sowie ein neuer Amplitudenwert Am von U2s. Diese Phasenverschiebung wird mit einem Phasendetektor 7 in eine analoge Spannung U4 umgeformt und beispielsweise von der vorgenannten Kontrolleinrichtung eingelesen. Ebenfalls möglich ist das Generieren eines digitalen logischen Signals S4 (siehe dazu die Figur 5), welches angibt, ob das Frequenzgeneratorsignal U1 gegenüber dem Schwingkreissignal U2s voreilend ist oder nicht. Je nach eingestellter Frequenz des Frequenzgeneratorsignals U1 und der zusätzlichen Kapazität C5 ändert das Signal S4 seinen Wert. Dieses wird unter Bezugnahme auf die Figur 5 erklärt.

Die Figur 4 zeigt eine andere schematische Darstellungsform des Parallelschwingkreises aus der Figur 3. Die in der Figur 3 miteinander induktiv gekoppelten Spulen L1 und L2 sind durch das Ersatzschaltbild des kern- und verlustlosen Transformators dargestellt.

Die Figur 5 zeigt ein Ausführungsbeispiel eines Phasendetektors 7. Der Phasendetektor weist zwei Komparatoren 11 und 12 auf. Nachgeschaltet finden sich ein XOR-Bauteil 13 und ein D-Flip-Flop 16. Wie zu Figur 2 erläutert, wird der Parallelschwingkreis durch den Frequenzgenerator 3 vorzugsweise wenig unterhalb seiner Resonanzfrequenz angeregt. Die Frequenzgeneratorspannung ist vorzugsweise sinusförmig.

Am Eingang des Phasendetektors liegen somit die Signale des Frequenzgenerators U1 und des statorseitigen Schwingkreises U2s an. Diese werden durch die Komparatoren 11 und 12 in die Rechtecksignale S1 und S2 umgeformt, die durch ein XOR-Bauteil 13 miteinander verknüpft werden. Dabei entsteht das Rechtecksignal S3, dessen Einschalt-Perioden-Verhältnis proportional zur Phasenverschiebung zwischen U1 und U2s ist. Nachgeschaltet zum XOR-Bauteil 13 ist ein Tiefpassfilter 14 und ein Verstärker 15. Über den Tiefpassfilter 14 wird das Signal gefiltert und durch den Verstärker 15 verstärkt. Dieses analoge Signal U4 wird schliesslich von der Kontrolleinrichtung 17 eingelesen.

Parallel zu diesem Pfad ist das D-Flip-Flop 16 angeordnet. Die Rechtecksignale S1 und S2 der Komparatoren 11 und 12 werden in das D-Flip-Flop 16 eingespiesen. Das D-Flip-Flop 16 generiert das digitale Signal S4. Das Signal S4 ist logisch 1, wenn das Rechtecksignal S2 gegenüber Rechtecksignal S1 voreilend ist, andernfalls ist das Signal S4 logisch 0, wodurch eine Messer-Leiter-Berührung angezeigt wird. Anhand der Signale U4 und S4 steuert die Kontrolleinrichtung 17, die auch Teil der Schaltungsanordnung 28 sein kann, den Frequenzgenerator 3 so an, dass der LC-Schwingkreis ohne Leiterkontakt vorzugsweise wenig unterhalb seiner Eigenresonanz schwingt und somit empfindlich auf eine Kapazitätserhöhung durch einen allfälligen Leiterkontakt reagieren kann.

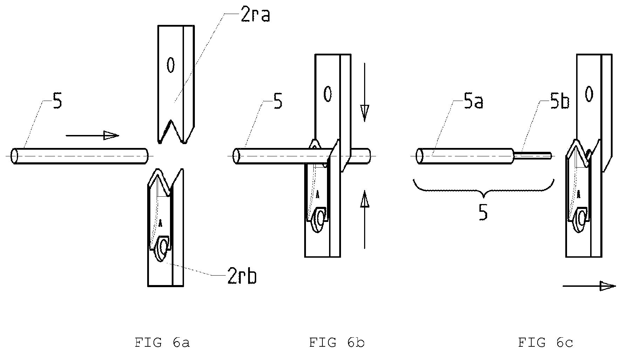

Die Figuren 6a bis 6c zeigen einen schematischen Ablauf eines Abisoliervorgangs. Beim Abisolieren eines Kabels 5 wird dieses typischerweise in einem ersten Schritt (siehe Figur 6a) in Pfeilrichtung zwischen die offenen Werkzeuge eingebracht, die vorliegend als Messer 2ra, 2rb ausgebildet sind. Sobald sich das abzuisolierende Kabel 5 an entsprechender Position befindet, wird dieses mittels einer geeigneten Vorrichtung gehalten, typischerweise mittels Zentrierbacken (hier nicht gezeigt). Es ist ebenso vorstellbar, dass das Kabel 5 zuerst in der geeigneten Vorrichtung gehalten wird und mittels dieser Vorrichtung zwischen die Werkzeuge eingebracht wird. Zu diesem Zeitpunkt schwingen die Messer 2ra, 2rb bereits in messbereitschaft, vorzugsweise gegenüber dem Frequenzgenerator leicht voreilend. Die Messer 2ra, 2rb werden aufeinander in Pfeilrichtung (Figur 6b) zubewegt und fangen an, in die elektrisch nichtleitende Umhüllung 5a einzuschneiden. Wenn die Messer 2ra, 2rb zu nahe aufeinander zubewegt werden, berührt ein oder berühren beide Messer 2ra, 2rb den elektrischen Leiter 5b.

Wird der Schwingkreis, wie zu Figur 3 und Figur 5 erläutert, durch diesen Messer-Leiter-Kontakt verstimmt, verändern sich die Phasenlage S4 und das Signal U4 entsprechend der Phasenverschiebung des statorseitigen Schwingkreissignals U2s gegenüber dem Frequenzgeneratorsignal U1 sprungartig von vor- auf nacheilend, wodurch die Berührung detektierbar ist.

Um den Abisoliervorgang zu beenden, werden die Messer 2r, nachdem sie genügend tief in die elektrisch nichtleitende Umhüllung 5a eingeschnitten haben, typischerweise wieder etwas geöffnet. Dann wird die elektrisch nichtleitende Umhüllung 5a vom elektrischen Leiter 5b entfernt. Dies geschieht typischerweise durch das relative Bewegen der Messer 2ra, 2rb gegenüber dem Kabel 5 entlang der Längsachse des elektrischen Leiters 5b (Figur 6c) durch zum Beispiel Bewegen der Zentrierbacken oder Bewegen der Messer 2ra, 2rb. Die elektrisch nichtleitende Umhüllung 5a wird damit vom elektrischen Leiter 5b abgezogen.

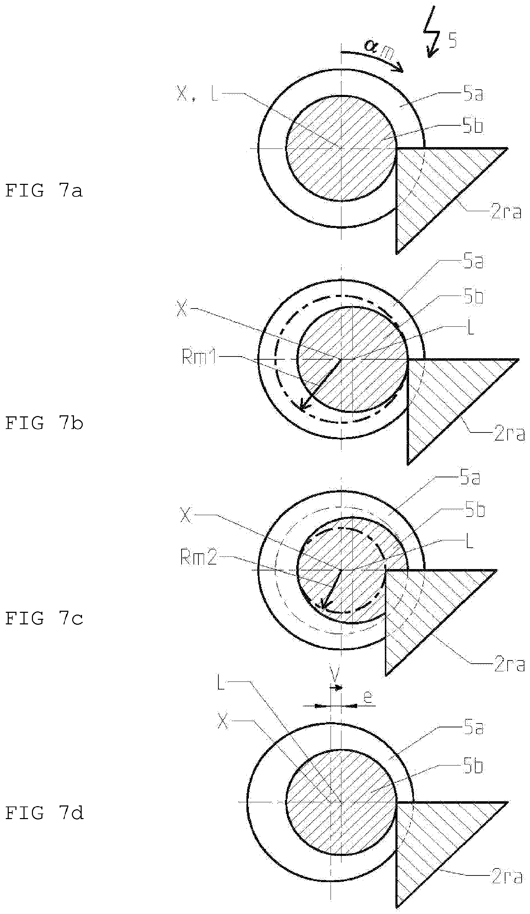

Die Figuren 7a bis 7d zeigen Querschnitte durch einen Leiter 5b und einen schematischen Ablauf des Tangentialschnittverfahrens zur Messung einer Exzentrizität und des Durchmessers des elektrischen Leiters sowie zur Korrektur der Exzentrizität des elektrischen Leiters 5b gegenüber der Rotationsachse. Die Figur 7a zeigt einen Querschnitt durch ein Kabel 5. Das Kabel 5 ist in der Figur 7a ideal ausgebildet. Das Kabel 5 besteht aus einer elektrisch nichtleitenden Umhüllung 5a sowie einem Leiter 5b. Der Leiter 5b ist koaxial zur elektrisch nichtleitenden Umhüllung 5a angeordnet. Da das Kabel zur Bearbeitung zentrisch zur Rotationsachse X an seiner Umhüllung gehalten wird, beispielsweise durch hier nicht dargestellte Zentrierbacken, fällt somit die Achse des Leiters 5b mit der Rotationsachse X zusammen. Der Querschnitt durch das Kabel 5 gemäss Figur 7a stellt den Idealfall dar. Das Messer 2ra hat in der Figur 7a bereits rotativ in die elektrisch nichtleitende Umhüllung 5a eingeschnitten indem es um den Leiter 5b rotierend auch noch in kleinen Schritten pro Umdrehung zur Rotationsachse X hin bewegt wurde. Das Messer 2ra berührt den Leiter 5b gerade nicht. Sobald das Messer 2ra weiter in Richtung der Rotationsachse X bewegt wird, berührt das Messer 2ra den Leiter 5b. Bei einer Drehung des Messers 2ra in Pfeilrichtung um den Leiter 5b herum verliert dieses den Kontakt zum Leiter 5b nicht mehr und schneidet den Leiter 5b über den gesamten Umfang gleich tief ein.

Figur 7b zeigt den Querschnitt eines Kabels 5, welches im Gegensatz zu Figur 7a, herstellungsbedingt einer Symmetrieabweichung unterworfen ist und so in der Praxis oft anzutreffen ist. Das Kabel 5 gemäss der Figur 7b weist den gleichen Aufbau auf wie das Kabel 5 gemäss der Figur 7a. Der Leiter 5b ist jedoch gegenüber seiner elektrisch nichtleitenden Umhüllung 5a exzentrisch angeordnet. Bei einem wie vorliegend beschriebenen Abisoliervorgang dreht sich das Messer in Pfeilrichtung (siehe Figur 7a) um die Rotationsachse X. Die Rotationsachse fällt vorliegend mit einer Symmetrieachse der elektrisch nichtleitenden Umhüllung 5a zusammen, jedoch nicht mit der Leiterachse L. Das heisst nun, wenn sich das Messer 2ra während es um den Leiter rotiert auch noch in kleinen Schritten pro Umdrehung zur Rotationsachse X hin bewegt, berührt das Messer 2ra den Leiter 5b erstmals an einem Punkt, der in Bezug zur Rotationsachse X für eine Messer-Leiter-Berührung am weitesten entfernt angeordnet ist. In diesem Zeitpunkt kann die polare Stellung des Messers 2ra, d. h. der Winkel $\alpha$m, sowie der Abstand des Messers 2ra zur Rotationsachse X ausgelesen werden. Dies entspricht einem ersten Berührungsradius Rm1 und einem ersten Berührungswinkel $\alpha$m1.

Figur 7c zeigt den Querschnitt des Kabels 5 aus der Figur 7b. In der Figur 7c ist das Messer 2ra bereits weiter in Richtung der Rotationsachse X bewegt worden. Im in der Figur 7c abgebildeten Zeitpunkt ist das Messer 2ra über eine vollständige Umdrehung des Messers 2ra um den Leiter 5b in Kontakt mit dem Leiter 5b. Das heisst, dass der Zeitpunkt, in dem ein ununterbrochener Kontakt zwischen Messer 2ra und dem Leiter 5b feststellbar ist, der Zeitpunkt ist, in dem das Messer 2ra in einem grösstmöglichen radialen Abstand zur Rotationsachse X für einen kontinuierlichen Messer-Leiter-Kontakt ist. Dies entspricht einem zweiten Berührungsradius Rm2.

Aus dem Berührungsradius Rm1, dem Berührungsradius Rm2 sowie aus dem ersten Berührungswinkel $\alpha$m1 kann ein Exzentrizitätsvektor V (siehe Figur 7d) berechnet werden.

Figur 7d zeigt einen Querschnitt des Kabels 5 aus der Figur 7b, in welchem die Exzentrizität von Leiterachse L zu Rotationsachse X des Kabels 5, korrigiert ist. Das Kabel 5 wurde entsprechend des berechneten Exzentrizitätsvektor V so verschoben, dass die Leiterachse L mit der Rotationsachse X zusammenfällt. Die Symmetrieachse der elektrisch nichtleitenden Umhüllung 5a ist somit ebenfalls entsprechend dem Exzentrizitätsvektor V zur Rotationsachse X verschoben. In Bezug auf den Leiter 5b und das Messer 2ra entspricht diese Anordnung jetzt der idealen Anordnung gemäss der Figur 7a. Das Verschieben des Kabels 5 kann dabei durch ein Verschieben der Zentrierbacken, bzw. der Vorrichtung, welche geeignete Mittel zum Klemmen oder Halten des Kabels 5 aufweist, erfolgen.

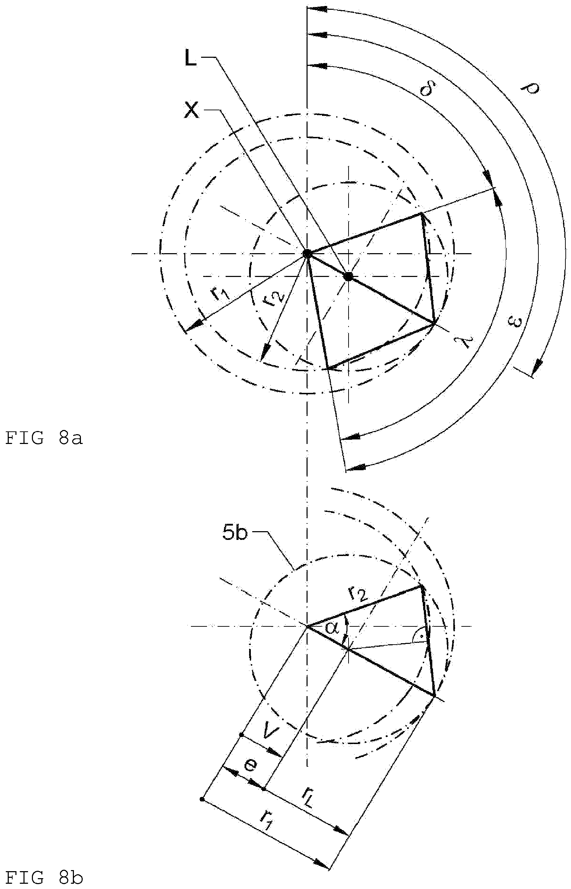

Die Figur 8a mit 8b zeigt das Sichelschnitt-Verfahren, ein weiteres, universelles Verfahren der Exzentrizitäts-, Exzentrizitätsvektor- und Leiterradius-Messung, wie sie schon mit den Figuren 7b und 7c vorgestellt wurde. Unerheblich ist es, wie auch beim Tangentialschnittverfahren gemäss den Figuren 7b bis 7d, woher die Exzentrizität stammt, ob von Leiter zu Kabelisolation, Kabelhaltevorrichtung zu Rotationsachse oder von der Summe mehrerer mechanischer Asymmetrien oder Unstimmigkeiten. Beim Sichelschnitt-Verfahren kann ein Leiter 5b auch durch einen Metallstift ersetzt werden, sodass sich eine gemessene Exzentrizität e ausschliesslich auf die Exzentrizität von Hauptachse der Kabelhaltevorrichtung zu Rotationsachse X beziehen lässt. Die Figur 8a zeigt, im Gegensatz zu der Figur 7b, lediglich den Leiter 5b im Querschnitt mit seiner Längsachse L. Wie aus der Figur 8a ersichtlich ist, ist die Längsachse L in Bezug auf die Rotationsachse X versetzt angeordnet. Zur Bestimmung der Exzentrizität (e), und/oder des Exzentrizitätsvektors (V) und/oder des Leiterradius (rL) wird das Messer 2ra, wie zu Figur 7b beschrieben, unter gleichzeitigem Rotieren des Messers solange in Richtung der Rotationsachse X bewegt, bis das Messer 2ra den Leiter 5b berührt. Aus dieser Berührung ergibt sich der erste Berührungsradius r1, der dem Radius Rm1 aus der Figur 7b entspricht und der erste Berührungswinkel $\alpha$m1, der beim Sichelschnitt-Verfahren zur Bestimmung des Exzentrizitätsvektors zwar nicht notwendig ist, jedoch zur Plausibilitätskontrolle ebenfalls gemessen werden kann. Das Messer 2ra wird während dem Rotieren des Messers 2ra in einem nächsten Schritt um einen bestimmten Betrag in Richtung der Rotationsachse X zugestellt und befindet sich sodann in einem zweiten Abstand zur Rotationsachse X. Dieser zweite Abstand entspricht dem Sichelschnittradius r2. Der Sichelschnittradius r2 ist so gewählt, dass der Leiter 5b zu Messzwecken über einen Sichelschnittwinkel λ von vorzugsweise 120° bis 200° eingeschnitten wird. In Bezug zu einem gewählten Rotationswinkel-Nullpunkt gibt der erste Sichelschnitt-Berührungswinkel δ den Winkel an, bei welchem auf dem Sichelschnittradius r2 eine Messer-Leiter-Berührung beginnt, und der letzte Sichelschnitt-Berührungswinkel ε, den Winkel, bei welchem auf dem zweiten Schnittradius r2 eine Messer-Leiter-Berührung endet. Dazwischen eingeschlossen ist der Sichelschnittwinkel λ. Daraus lässt sich in Bezug auf den vorgenannten Rotationswinkel-Nullpunkt ein mittlerer Berührungswinkel ρ ermitteln, der den sichelförmigen Leitereinschnitt in zwei symmetrische Hälften unterteilt. Dieser mittlere Berührungswinkel ρ des Sichelschnittes entspricht dem ersten Berührungswinkel αm1 aus der Figur 7 jedoch ist der mittlere Berührungswinkel ρ des Sichelschnittes als Mittelwert vom ersten Sichelschnitt-Berührungswinkel δ und letztem Sichelschnitt-Berührungswinkel ε genauer bestimmbar. Der mittlere Berührungswinkel ρ kann auch als Linienschwerpunkt des Sichelschnittes berechnet werden. Aus den entsprechenden Daten lässt sich eine Exzentrizität e und/oder ein Exzentrizitätsvektor V berechnen. Während das Messer den Sichelschnittwinkel λ überstreicht, findet eine messbare Messer-Leiter-Berührung statt. Der Sichelschnittwinkel λ und der mittlere Berührungswinkel ρ können aus den Winkeln ε und δ bestimmt und der Leiterradius rL kann aus den geometrischen Beziehungen, wie sie in der Fig. 8 dargestellt sind, mit folgenden Formeln berechnet werden:

$$\lambda = \varepsilon - \delta \qquad \alpha = \frac{\lambda}{2} \qquad r_L = \frac{r_1^2 + r_2^2 - 2r_1 r_2 \cos\alpha}{2\,(r_1 - r_2 \cos\alpha)}$$

Somit kann gemäss der Fig. 8b auch die Exzentrizität e, der mittlere Berührungswinkel ρ und der Exzentrizitätsvektor V berechnet werden:

$$e = r_1 - r_L \qquad \rho = \frac{(\delta + \varepsilon)}{2} \qquad V = \vec{e} = e\angle\rho$$

Gemäss dem mit Hilfe der Fig. 7c beschriebenen Verfahren zur Exzentrizitätsmessung wird der Leiter so tief eingeschnitten, bis eine kontinuierliche Messer-Leiter-Berührung stattfindet. In obiger Formel für rL heisst das, dass α 180° wird. Für diesen Grenzwert wird rL somit:

$$r_L = \frac{r_1^2 + r_2^2 - 2r_1 r_2 \cdot (-1)}{2\,(r_1 - r_2 \cdot (-1))} = \frac{r_1^2 + 2r_1 r_2 + r_2^2}{2\,(r_1 + r_2)} = \frac{(r_1 + r_2)^2}{2\,(r_1 + r_2)} = \frac{r_1 + r_2}{2}$$

Dieses Resultat ist grafisch aus der Fig. 7c, mit Rm1=r1 und Rm2=r2, ersichtlich.

Ein Exzentrizitätsvektor kann auch aus induktiven Messwerten berechnet werden, die zum Beispiel von in Zentrierbacken platzierten Spulen stammen. Eine solche Anordnung hat den Vorteil, dass die Exzentrizität von Leiter- zu Rotationsachse noch vor dem Einschneiden korrigiert werden kann.

Die Spulen zur Berechnung des Exzentrizitätsvektors können auch ausserhalb der Zentrierbacken in einem separaten Sensor-Gehäuse konzentrisch zur Rotationsachse X angebracht sein.

Weiter kann ein Exzentrizitätsvektor auch über mindestens zwei den Kabelquerschnitt erfassende Röntgenbilder ermittelt werden.

Die Bezugszeichenliste ist, wie auch der technische Inhalt der Patentansprüche und Figuren, Bestandteil der Offenbarung. Gleiche Bezugszeichen bedeuten gleiche Bauteile, Bezugszeichen mit unterschiedlichen Indizes geben funktionsgleiche, zusammengehörende oder ähnliche Bauteile an.

Bezugszeichenliste

| | |
|---|---|
| 1r | Werkzeughalter |
| 2ra, 2rb | elektrisch leitfähiges Werkzeug, Messer |
| 3 | Frequenzgenerator |
| 4r | elektrische Leiter des rotorseitigen Teilkreises |
| 4s | elektrische Leiter des statorseitigen Teilkreises |

| | |
|---|---|
| 5 | Kabel |
| 5a | elektrisch nichtleitende Umhüllung |
| 5b | elektrischer Leiter |
| 6r | Hohlwelle |
| 7 | Phasendetektor |
| 10 | Abisolierkopf |
| 11 | Komparator |
| 12 | Komparator |
| 13 | XOR-Bauteil |
| 14 | Tiefpassfilter |
| 15 | Verstärker |
| 16 | D-Flip-Flop |
| 17 | Kontrolleinrichtung |
| 20 | Antrieb |
| 28 | Schaltungsanordnung |
| 30 | Antrieb |
| 40 | elektrische Isolierung |
| 41 | Elektrisch leitende Platten |
| 50 | Rahmen |
| 51 | Befestigungsplatte |
| 100 | Abisoliermaschine |
| | |
| A | rotorseitiger Teilkreis |
| Am | Amplitudenwert von U2s |
| B | statorseitiger Teilkreis |
| C2r | Werkzeugkapazität |
| C4r | Leiterkapazität des rotorseitigen Teilkreises |
| C4s | Leiterkapazität des statorseitigen Teilkreises |
| C5 | Leiterkapazität des zu bearbeitenden Kabels |
| Ca | Ausgangskapazität |
| COM | Kommunikationsschnittstelle |
| Ct | Gesamtkapazität |
| ECB | elektrisch leitender Körper |
| e | Exzentrizität, Distanz von Rotationsachse zu Leiterachse |
| f | Frequenz |
| L | Längsachse Leiter |
| L1 | rotorseitige Spule, rotorseitiges Induktivelement |
| L2 | statorseitige Spule, statorseitiges Induktivelement |
| Rm1 | Erster Berührungsradius |
| Rm2 | Zweiter Berührungsradius |
| Rv | Vorwiderstand |
| r1 | Erster Berührungsradius |
| r2 | Sichelschnittradius |
| rL | Leiterradius |
| S1 | Rechtecksignal |
| S2 | Rechtecksignal |
| S3 | Rechtecksignal, Pulsbreite proportional zur Phase |
| S4 | Signal, digital, Phasenlage |
| S5 | Steuersignal für den Frequenzgenerator |
| U1 | Frequenzgeneratorsignal |
| U2s | statorseitiges Schwingkreissignal |
| U2r | rotorseitiges Schwingkreissignal |
| U4 | Analoges Signal proportional zur Phasenverschiebung |
| V | Exzentrizitätsvektor |
| X | Rotationsachse |
| α | Halber Sichelschnittwinkel |
| αm | Rotations-Winkel eines Messers (0-360°) |
| αm1 | Erster Berührungswinkel eines Messers (0-360°) |

δ     Erster Sichelschnitt-Berührungswinkel
ε     Letzter Sichelschnitt-Berührungswinkel
φ     Phasenverschiebung
λ     Sichelschnittwinkel
ρ     Mittlerer Berührungswinkel


**Patentansprüche**

1.  Einrichtung zur Erkennung der Berührung eines, insbesondere mit einer elektrisch nichtleitenden Umhüllung (5a) versehenen, elektrischen Leiters (5b) durch zumindest ein elektrisch leitfähiges, um den elektrischen Leiter (5b) rotierendes Werkzeug (2r), umfassend:

    - einen Werkzeughalter (1r), wobei das zumindest eine Werkzeug (2r) an diesem Werkzeughalter (1r) angeordnet ist,
    - einen elektrisch leitfähigen Körper (ECB), welcher am Werkzeughalter (1r) angeordnet ist, und vorzugsweise den Werkzeughalter (1r) selbst umfasst und gegenüber dem zumindest einen Werkzeug (2r) insbesondere mit einer elektrischen Isolierung (40, 40a, 40b) elektrisch isoliert ist,
    - einen Parallelschwingkreis, und
    - eine Schaltungsanordnung (28),
    wobei der Parallel-Schwingkreis über elektrische Leiter (4s) mit der Schaltungsanordnung (28) zur Ermittlung der Änderung zumindest eines charakteristischen Schwingungsparameters (φ, Am, f), insbesondere der Phasenlage (S4) und/oder der Phasenverschiebung (φ), des Parallel-Schwingkreises verbunden ist, und
    wobei der Parallel-Schwingkreis eine Gesamtkapazität (Ct) aufweist, die funktionell zumindest die Werkzeugkapazität (C2r) umfasst,
    **dadurch gekennzeichnet, dass**

    - der Werkzeughalter (1r) als Hohlkörper ausgebildet ist und um eine Rotationsachse (X), die mit der Längsachse des elektrischen Leiters (5b) zusammenfällt, rotativ gelagert ist, wodurch das zumindest eine Werkzeug (2r) um den Leiter rotierbar ist;
    - der Parallelschwingkreis zumindest einen rotorseitigen Teilkreis (A) mit einem rotorseitigen Induktivelement (L1) und zumindest einen statorseitigen Teilkreis (B) mit einem statorseitigen Induktivelement (L2) umfasst;
    - das rotorseitige Induktivelement (L1) am rotativ gelagerten Werkzeughalter (1r) angeordnet ist und über rotorseitige_Leiter (4r) mit dem zumindest einen Werkzeug (2r) und mit dem elektrisch leitfähigen Körper (ECB) elektrisch verbunden ist und Elemente des rotorseitigen Teilkreises (A) des Parallel-Schwingkreises bilden;
    - der statorseitige Teilkreis (B) des Parallel-Schwingkreises über statorseitige elektrische Leiter (4s) mit der Schaltungsanordnung (28) verbunden ist;
    - das rotorseitige Induktivelement (L1) und das statorseitige Induktivelement (L2) als Spulen ausgebildet sind, eine zylindrische oder eine planparallele Bauform koaxial zur Rotationsachse (X) des Werkzeughalters (1r) aufweisen und zueinander beabstandet und berührungslos derart zueinander angeordnet und induktiv gekoppelt sind, dass der statorseitige Teilkreis (B) und der rotorseitige Teilkreis (A) einen gemeinsamen, induktiv gekoppelten, Schwingkreis bilden, und
    - damit unabhängig oder in definierter Funktion abhängig von der Rotationsgeschwindigkeit des Werkzeughalters (1r) mit der Schaltungsanordnung (28) zumindest einer der charakteristischen Schwingungsparameter (φ, Am, f) des Parallel-Schwingkreises messbar ist.

2.  Einrichtung nach Anspruch 1, **dadurch gekennzeichnet, dass** das rotorseitige und das statorseitige Induktivelement sich axial zumindest teilweise überlappen, und/oder **dass** das statorseitige Induktivelement und das rotorseitige Induktivelement je als Ringspule ausgebildet sind wobei beide Ringspulen einander zumindest teilweise oder vollständig überlappen,
    und/oder **dass** das rotorseitige und/oder das statorseitige Induktivelement als einlagige oder als mehrlagige Spule (L1, L2) ausgebildet ist.

3.  Einrichtung nach einem der Ansprüche 1 oder 2, **dadurch gekennzeichnet, dass** das rotorseitige und/oder das statorseitige Induktivelement als Wicklung oder als spiralförmiger Aufdruck eines elektrischen Leiters auf einem elektrisch nicht-leitenden und nicht magnetischen Werkstoff, vorzugsweise Kunststoff, ausgebildet ist bzw. sind.

**4.** Einrichtung nach einem der Ansprüche 1 bis 3, **dadurch gekennzeichnet, dass** das rotorseitige und/oder das statorseitige Induktivelement einen ferromagnetischen Werkstoff, zur Verbesserung der Kopplung, aufweist.

**5.** Einrichtung nach einem der Ansprüche 1 bis 4, **dadurch gekennzeichnet, dass** das Werkzeug (2r) zwischen zwei leitenden Platten (41) eingebettet ist, welche elektrisch über die rotorseitigen elektrischen Leiter (4r) mit dem rotorseitigen Induktivelement (L1) verbunden sind und gegenüber dem elektrisch leitenden Körper (ECB) durch elektrische Isolierungen (40a, 40b) elektrisch isoliert sind, und/oder **dass** das Werkzeug (2r) durch zumindest einen elektrischen Schleifkontakt gebildet durch die elektrisch leitenden Platten (41) und das Werkzeug (2r) und über die rotorseitigen elektrischen Leiter (4r) mit dem rotorseitigen Induktivelement (L1) verbunden ist.

**6.** Abisoliermaschine mit zumindest einem Abisoliermesser als Werkzeug (2r), das von einem um eine Rotationsachse rotativ gelagerten Werkzeughalter gehalten ist, und mit zumindest einer Einrichtung zur Erkennung der Berührung eines elektrischen Leiters (5b) eines Kabels (5) nach einem der Ansprüche 1 bis 5, wobei die Einrichtung mit zumindest einem der Werkzeuge (2ra, 2rb) verbunden ist.

**7.** Verfahren zur Erkennung der Berührung eines, insbesondere mit einer elektrisch nichtleitenden Umhüllung (5a) versehenen, elektrischen Leiters (5b) durch zumindest ein elektrisch leitfähiges, um den elektrischen Leiter (5b) rotierendes Werkzeug (2r) mit einer Einrichtung nach einem der Ansprüche 1 bis 5 oder mit einer Abisoliermaschine nach Anspruch 6,
mit den Schritten:

- Einstellen eines Frequenzgeneratorsignales entsprechend einer definierten Empfindlichkeit im Bereich der Resonanzfrequenz, vorzugsweise unterhalb der Resonanzfrequenz des Parallelschwingkreises
- Messen von zumindest einem charakteristischen Schwingungsparameter ($\varphi$, Am, f) des Parallelschwingkreises und festlegen dessen Grenzwertes zur Berührung des Leiters (5b) durch das Werkzeug (2ra, 2rb)
- Rotieren des Werkzeughalters (1r) relativ zur stationären Schaltungsanordnung
- Kontinuierliches Messen zumindest dieses charakteristischen Schwingungsparameters ($\varphi$, Am, f) des Parallel-Schwingkreises insbesondere der Phasenlage S4 und / oder der Phasenverschiebung ($\varphi$) und Vergleichen dieser Messwerte mit dem oder den durch Referenzmessungen festgelegten Grenzwert oder Grenzwerten zur Detektion einer Berührung des Leiters (5b) durch das Werkzeug (2ra, 2rb).

**8.** Verfahren nach Anspruch 7, **dadurch gekennzeichnet, dass** beim Erreichen des Grenzwertes ein Signal ausgegeben wird, wobei vorteilhaft mit dem Signal zumindest eine Funktion der Einrichtung gesteuert wird.

**9.** Verfahren nach Anspruch 7 oder 8, **dadurch gekennzeichnet, dass** die Schaltungsanordnung (7) die Phasenlage (S4) und / oder die Phasenverschiebung ($\varphi$) zwischen dem statorseitigen Schwingkreissignal (U2s) und dem Frequenzgeneratorsignal (U1) auswertet.

**10.** Verfahren nach Anspruch 7 bis 9, **dadurch gekennzeichnet, dass** der Zeitpunkt der Berührung des Leiters (5b) durch das Werkzeug (2r) und die Dauer der Berührung des Leiters (5b) durch das Werkzeug (2r) insbesondere als separate Parameter erfasst werden und vorzugsweise anhand dieser Parameter der jeweils bearbeitete elektrische Leiter kategorisiert wird und/oder
**dass** der Ort der Berührung des Leiters (5b) durch das Werkzeug (2r) in Richtung der Rotationsachse (X) insbesondere als separater Parameter erfasst wird und vorzugsweise anhand dieser Parameter der jeweils bearbeitete elektrische Leiter kategorisiert wird.

**11.** Verfahren nach Anspruch 7 bis 10, **dadurch gekennzeichnet, dass** die Stellung des Werkzeuges kontinuierlich erfasst wird und für den Zeitpunkt der Berührung des Leiters (5b) durch das Werkzeug (2r) anhand der entsprechenden Messeröffnung den Kabeldurchmesser bestimmt wird und/oder,
**dass** die Winkelposition ($\alpha$m) des oder der überwachten Werkzeuge (2ra, 2rb) in Bezug auf die Rotationsachse (X), insbesondere kontinuierlich, erfasst wird.

**12.** Verfahren nach Anspruch 11, **dadurch gekennzeichnet, dass** ein Abstand des Werkzeuges (2ra) zur Rotationsachse (X) solange verkleinert wird, bis eine erste punktuell tangierende Berührung des Leiters (5b) durch das Werkzeug (2ra) entsteht und die Winkelposition ($\alpha$m1) des Werkzeuges (2ra) sowie die Stellung des Werkzeuges (2ra) abgespeichert wird, wobei die Stellung des Werkzeuges (2ra) einem zugehörigem ersten Berührungsradius (Rm1, r1) entspricht, wobei vorzugsweise ein Abstand des Werkzeuges (2ra) zur Rotationsachse (X) weiter verkleinert wird, bis eine kontinuierliche Berührung des Leiters (5b) durch das Werkzeug (2ra) während einer ganzen Umdrehung des Werkzeuges (2ra) um den Leiter auftritt und die Stellung des Werkzeuges (2ra) als zweiter Berührungsradius (Rm2) abgespeichert wird.

13. Verfahren nach Anspruch 12, **dadurch gekennzeichnet, dass** ein Exzentrizitätsvektor (V) aus dem ersten Berührungsradius (Rm1) und dem zweiten Berührungsradius (Rm2) und der Winkelposition ($\alpha$m1) berechnet wird.

14. Verfahren nach Anspruch 11, **dadurch gekennzeichnet, dass** ein Abstand des Werkzeuges (2ra) zur Rotationsachse (X) solange verkleinert wird, bis eine erste punktuell tangierende Berührung des Leiters (5b) durch das Werkzeug (2ra) entsteht und dies als erster Berührungsradius (Rm1, r1) abgespeichert wird und der Abstand des Werkzeuges (2ra) zur Rotationsachse (X) darüber hinaus bis auf einen Sichelschnittradius (r2) verkleinert wird, bis eine Berührung des Leiters (5b) durch das Werkzeug (2ra) über einen Umfang von vorzugsweise 120° bis 200° entsteht, wobei der Beginn der Berührung als erster Sichelschnitt-Berührungswinkel ($\delta$) und das Ende der Berührung als letzter Sichelschnitt-Berührungswinkel ($\varepsilon$) abgespeichert wird, und **dass** vorzugsweise ein Leiterradius (rL) und/oder eine Exzentrizität (e) und/oder ein Exzentrizitätsvektor (V) aus dem ersten Berührungsradius (r1), dem Sichelschnittradius (r2), dem ersten Sichelschnitt-Berührungswinkel ($\delta$) und dem letzten Sichelschnitt-Berührungswinkel ($\varepsilon$) berechnet werden/wird.

15. Verfahren nach Anspruch 13 oder 14, **dadurch gekennzeichnet, dass** anhand des Exzentrizitätsvektors (V) der Leiter (5b) in Bezug auf die Rotationsachse (X) derart verschoben wird, dass eine Exzentrizität kompensiert wird.

16. Verfahren nach einem der Ansprüche 11 bis 15, **dadurch gekennzeichnet, dass** der elektrische Leiter (5b) eine elektrisch leitfähige Schicht eines Koaxial oder Triaxialkabels ist, wobei die Schritte für einzelne Schichten des Koaxial- oder Triaxialkabels wiederholt werden und so die Durchmesser und/oder Exzentrizitätsvektoren (V) der einzelnen leitfähigen Schichten bestimmt werden.

17. Verfahren nach den Ansprüchen 10 bis 16, **dadurch gekennzeichnet, dass** pro Werkzeug (2ra, 2rb) der Zeitpunkt der Berührung des Leiters (5b) durch das Werkzeug (2ra, 2rb) und die Dauer der Berührung des Leiters (5b) durch das Werkzeug (2ra, 2rb) separat erfasst wird.

18. Verfahren nach Anspruch 17 sowie Anspruch 12, **dadurch gekennzeichnet, dass** pro Werkzeug (2ra, 2rb) der jeweilige Berührungsdurchmesser (Rm1) berechnet wird, sodass die Werkzeuge (2ra, 2rb) radial in Bezug auf die Rotationsachse (X) so justiert werden können, dass jedes Werkzeug (2ra, 2rb) den gleichen Abstand zur Rotationsachse (x) aufweisen.

## Claims

1. A device for detecting the contacting of an electrical conductor (5b), which is provided with an electrically non-conductive covering (5a) in particular, by at least one electrically conductive tool (2r), which is rotating around the electrical conductor (5b), comprising:

   - a tool holder (1r), the at least one tool (2r) being arranged on this tool holder (1r),
   - an electrically conductive body (ECB), which is arranged on the tool holder (1r), and preferably comprises the tool holder (1r) itself and is electrically insulated with respect to the at least one tool (2r), particularly with electrical insulation (40, 40a, 40b),
   - a parallel resonant circuit, and
   - a circuit arrangement (28),
   the parallel resonant circuit being connected via electrical conductors (4s) to the circuit arrangement (28) to determine the change at least of a characteristic oscillation parameter ($\varphi$, Am, f), particularly the phase position (S4) and/or the phase shift ($\varphi$), of the parallel resonant circuit, and
   the parallel resonant circuit having a total capacitance (Ct), which functionally comprises at least the tool capacitance (C2r),
   **characterized in that**

   - the tool holder (1r) is designed as a hollow body and is rotatably mounted about an axis of rotation (X), which coincides with the longitudinal axis of the electrical conductor (5b), as a result of which the at least one tool (2r) is rotatable around the conductor;
   - the parallel resonant circuit comprises at least one rotor-side partial circuit (A) having a rotor-side inductive element (L1) and at least one stator-side partial circuit (B) having a stator-side inductive element (L2);

- the rotor-side inductive element (L1) is arranged on the rotatably mounted tool holder (1r) and is electrically connected via rotor-side conductors (4r) to the at least one tool (2r) and to the electrically conductive body (ECB), and the same form elements of the rotor-side partial circuit (A) of the parallel resonant circuit;

- the stator-side partial circuit (B) of the parallel resonant circuit is connected via stator-side electrical conductors (4s) to the circuit arrangement (28);

- the rotor-side inductive element (L1) and the stator-side inductive element (L2) are designed as coils, have a cylindrical or a plane-parallel construction coaxially to the axis of rotation (X) of the tool holder (1r) and are spaced from one another and arranged contactlessly with respect to one another and inductively coupled in such a manner that the stator-side partial circuit (B) and the rotor-side partial circuit (A) form a common, inductively coupled, resonant circuit, and

- therefore at least one of the characteristic oscillation parameters ($\varphi$, Am, f) of the parallel resonant circuit can be measured in a manner independent of or dependent in a defined function on the rotational speed of the tool holder (1r) using the circuit arrangement (28).

2. The device according to Claim 1, **characterized in that** the rotor-side and the stator-side inductive elements axially overlap at least to some extent, and/or **in that** the stator-side inductive element and the rotor-side inductive element are each designed as a toroidal coil, wherein both toroidal coils at least partially or completely overlap one another, and/or **in that** the rotor-side and/or the stator-side inductive element is designed as a single-layered or as a multilayered coil (L1, L2).

3. The device according to either of Claims 1 and 2, **characterized in that** the rotor-side and/or the stator-side inductive element is or are designed as a winding or as spiral printing of an electrical conductor on an electrically non-conductive and non-magnetic material, preferably plastic.

4. The device according to one of Claims 1 to 3, **characterized in that** the rotor-side and/or the stator-side inductive element has a ferromagnetic material to improve the coupling.

5. The device according to one of Claims 1 to 4, **characterized in that** the tool (2r) is embedded between two conductive plates (41), which are electrically connected to the rotor-side inductive element (L1) via the rotor-side electrical conductors (4r) and are electrically insulated with respect to the electrically conductive body (ECB) by electrical insulation (40a, 40b), and/or **in that** the tool (2r) is connected by means of at least one electrical sliding contact, which is formed by the electrically conductive plates (41) and the tool (2r), and via the rotor-side electrical conductors (4r) to the rotor-side inductive element (L1).

6. A wire stripping machine having at least one wire stripping knife as tool (2r), which is held by a tool holder which is rotatably mounted about an axis of rotation, and having at least one device for detecting the contacting of an electrical conductor (5b) of a cable (5) according to one of Claims 1 to 5, the device being connected to at least one of the tools (2ra, 2rb).

7. A method for detecting the contacting of an electrical conductor (5b), which is provided with an electrically non-conductive covering (5a) in particular, by at least one electrically conductive tool (2r), which is rotating around the electrical conductor (5b), using a device according to one of Claims 1 to 5 or using a wire stripping machine according to Claim 6,

having the steps:

- setting a frequency generator signal corresponding to a defined sensitivity in the region of the resonant frequency, preferably below the resonant frequency of the parallel resonant circuit

- measuring at least one characteristic oscillation parameter ($\varphi$, Am, f) of the parallel resonant circuit and determining the limit value thereof for the contacting of the conductor (5b) by the tool (2ra, 2rb)

- rotating the tool holder (1r) relatively to the stationary circuit arrangement

- continuously measuring at least this characteristic oscillation parameter ($\varphi$, Am, f) of the parallel resonant circuit, particularly the phase position S4 and/or the phase shift ($\varphi$), and comparing these measured values with the limit value or limit values determined by reference measurements for detecting contacting of the conductor (5b) by the tool (2ra, 2rb).

8. The method according to Claim 7, **characterized in that** a signal is output when the limit value is reached, wherein at least one function of the device is advantageously controlled using the signal.

**9.** The method according to Claim 7 or 8, **characterized in that** the circuit arrangement (7) evaluates the phase position (S4) and/or the phase shift ($\varphi$) between the stator-side resonant circuit signal (U2s) and the frequency generator signal (U1).

**10.** The method according to Claims 7 to 9, **characterized in that** the time of the contacting of the conductor (5b) by the tool (2r) and the duration of the contacting of the conductor (5b) by the tool (2r) are detected as separate parameters in particular and the respectively processed electrical conductor is preferably categorized on the basis of these parameters, and/or
**in that** the location of the contacting of the conductor (5b) by the tool (2r) is detected in the direction of the axis of rotation (X) as a separate parameter in particular and the respectively processed electrical conductor is categorized on the basis of these parameters.

**11.** The method according to Claims 7 to 10, **characterized in that** the position of the tool is detected continuously and the cable diameter is determined for the time of contacting of the conductor (5b) by the tool (2r) on the basis of the corresponding blade opening, and/or
**in that** the angular position ($\alpha$m) of the monitored tool(s) (2ra, 2rb) is detected with respect to the axis of rotation (X), particularly continuously.

**12.** The method according to Claim 11, **characterized in that** a spacing of the tool (2ra) from the axis of rotation (X) is reduced until a first punctiform tangent contacting of the conductor (5b) by the tool (2ra) arises and the angular position ($\alpha$m1) of the tool (2ra) and the position of the tool (2ra) is stored, wherein the position of the tool (2ra) corresponds to an associated first contact radius (Rm1, r1), wherein a spacing of the tool (2ra) from the axis of rotation (X) is preferably reduced further until a continuous contacting of the conductor (5b) by the tool (2ra) occurs during a complete revolution of the tool (2ra) around the conductor and the position of the tool (2ra) is stored as a second contact radius (Rm2).

**13.** The method according to Claim 12, **characterized in that** an eccentricity vector (V) is calculated from the first contact radius (Rm1) and the second contact radius (Rm2) and the angular position ($\alpha$m1).

**14.** The method according to Claim 11, **characterized in that** a spacing of the tool (2ra) from the axis of rotation (X) is reduced until a first punctiform tangent contacting of the conductor (5b) by the tool (2ra) arises and this is stored as first contact radius (Rm1, r1) and the spacing of the tool (2ra) from the axis of rotation (X) is furthermore reduced to a sickle cut radius (r2) until contacting of the conductor (5b) by the tool (2ra) arises over an extent of preferably 120° to 200°, wherein the beginning of the contacting is stored as first sickle cut contact angle ($\delta$) and the end of the contacting is stored as last sickle cut contact angle ($\varepsilon$), and **in that** a conductor radius (rL) and/or an eccentricity (e) and/or an eccentricity vector (V) is/are calculated from the first contact radius (r1), the sickle cut radius (r2), the first sickle cut contact angle ($\delta$) and the last sickle cut contact angle ($\varepsilon$).

**15.** The method according to Claim 13 or 14, **characterized in that** the conductor (5b) is shifted with respect to the axis of rotation (X) in such a manner on the basis of the eccentricity vector (V) that an eccentricity is compensated.

**16.** The method according to one of Claims 11 to 15, **characterized in that** the electrical conductor (5b) is an electrically conductive layer of a coaxial or triaxial cable, wherein the steps are repeated for individual layers of the coaxial or triaxial cable and thus the diameters and/or eccentricity vectors (V) of the individual conductive layers are determined.

**17.** The method according to Claims 10 to 16, **characterized in that** the time of contacting of the conductor (5b) by the tool (2ra, 2rb) and the duration of the contacting of the conductor (5b) by the tool (2ra, 2rb) are detected separately for each tool (2ra, 2rb).

**18.** The method according to Claim 17 and Claim 12, **characterized in that** the respective contact diameter (Rm1) is calculated for each tool (2ra, 2rb), so that the tools (2ra, 2rb) can be radially adjusted with respect to the axis of rotation (X) such that each tool (2ra, 2rb) has the same spacing from the axis of rotation (X).

**Revendications**

**1.** Dispositif de détection de contact d'un conducteur électrique (5b), notamment pourvu d'un revêtement électriquement non conducteur (5a), par au moins un outil électriquement conducteur (2r) tournant autour du conducteur électrique (5b), comprenant :

- un porte-outil (1r), dans lequel au moins un outil (2r) est agencé sur ce porte-outil (1r),
- un corps électriquement conducteur (ECB), qui est agencé sur le porte-outil (1r), et comprend de préférence le porte-outil (1r) lui-même et est isolé électriquement dudit au moins un outil (2r), en particulier avec une isolation électrique (40, 40a, 40b),
- un circuit résonnant parallèle et
- un montage de circuit (28),
dans lequel le circuit résonnant parallèle est relié via des conducteurs électriques (4s) au montage de circuit (28) pour déterminer la modification d'au moins un paramètre d'oscillation caractéristique (φ, Am, f), en particulier l'angle de phase (S4) et/ou le déphasage (φ), du circuit résonnant parallèle, et
dans lequel le circuit résonnant parallèle présente une capacité totale (Ct), qui comprend fonctionnellement au moins la capacité d'outil (C2r),
**caractérisé en ce que**

- le porte-outil (1r) est réalisé sous la forme d'un corps et tourne autour d'un axe de rotation (X), qui est monté rotativement de manière à coïncider avec l'axe longitudinal du conducteur électrique (5b), à la suite de quoi le au moins un outil (2r) peut être tourné autour du conducteur ;
- le circuit résonnant parallèle comprend au moins un circuit partiel côté rotor (A) avec un élément inductif côté rotor (L1) et au moins un circuit partiel côté stator (B) avec un élément inductif côté stator (L2);
- l'élément inductif côté rotor (L1) est disposé sur le porte-outil monté rotativement (1r) et est électriquement relié audit au moins un outil (2r) et au corps électriquement conducteur (ECB) via des conducteurs côté rotor (4r) et des éléments du cercle primitif côté rotor (A) forment le circuit résonnant parallèle;
- le circuit partiel côté stator (B) du circuit résonnant parallèle est connecté au montage de circuit (28) via des conducteurs électriques côté stator (4s);
- l'élément inductif (L1) côté rotor et l'élément inductif (L2) côté stator sont conçus comme des bobines, ont une forme cylindrique ou plane parallèle coaxiale à l'axe de rotation (X) du porte-outil (1r) et sont disposés à distance l'un de l'autre et sans contact de telle sorte qu'ils soient couplés par induction, que le circuit partiel côté stator (B) et le circuit partiel côté rotor (A) forment un circuit résonnant commun, couplé par induction, et
- donc indépendamment ou dans une fonction définie en fonction de la vitesse de rotation du porte-outil (1r) avec le montage de circuit (28) au moins un des paramètres de vibration caractéristiques (φ, Am, f) du circuit résonnant parallèle peut être mesuré.

2. Dispositif selon la revendication 1, **caractérisé en ce que** l'élément inductif côté rotor et l'élément inductif côté stator se recouvrent axialement au moins partiellement, et/ou que l'élément inductif côté stator et l'élément inductif côté rotor sont chacun réalisés sous la forme d'un tore, dans lequel les deux tores se chevauchent au moins partiellement ou complètement,
et/ou que l'élément inductif côté rotor et/ou côté stator est conçu comme une bobine monocouche ou comme une bobine multicouche (L1, L2).

3. Dispositif selon une des revendications 1 ou 2, **caractérisé en ce que** l'élément inductif côté rotor et/ou côté stator est réalisé sous la forme d'un enroulement ou sous la forme d'une empreinte en spirale d'un conducteur électrique sur une matière électriquement non conductrice et non magnétique, de préférence en plastique.

4. Dispositif selon une des revendications 1 à 3, **caractérisé en ce que** l'élément inductif côté rotor et/ou côté stator comporte un matériau ferromagnétique pour améliorer le couplage.

5. Dispositif selon une des revendications 1 à 4, **caractérisé en ce que** l'outil (2r) est encastré entre deux plaques conductrices (41), qui sont reliées électriquement via les conducteurs électriques côté rotor (4r) à l'élément inductif côté rotor (L1) et en face du corps électriquement conducteur (ECB) sont isolés électriquement par une isolation électrique (40a, 40b), et/ou que l'outil (2r) est formé par au moins un contact glissant électrique à travers les plaques électriquement conductrices (41) et l'outil (2r) et au-dessus des conducteurs électriques côté rotor (4r) sont connectés à l'élément inductif côté rotor (LI).

6. Machine à dénuder avec au moins une lame de dénudage comme outil (2r), qui est maintenue par un porte-outil monté rotativement autour d'un axe de rotation, et comportant au moins un dispositif de détection de contact avec un conducteur électrique (5b) d'un câble (5) selon une des revendications 1 à 5, dans lequel le dispositif est relié à au moins un des outils (2ra, 2rb) .

7. Procédé de détection du contact d'un conducteur électrique (5b), notamment muni d'un revêtement électriquement non conducteur (5a), par au moins un outil électriquement conducteur (2r) tournant autour du conducteur électrique (5b) avec un dispositif selon une des revendications 1 à 5 ou avec une machine à dénuder selon la revendication 6, comportant les étapes consistant à :

- régler un signal de générateur de fréquence correspondant à une sensibilité définie dans la plage de la fréquence de résonance, de préférence en dessous de la fréquence de résonance du circuit résonnant parallèle,
- mesurer au moins un paramètre d'oscillation caractéristique ($\varphi$, Am, f) du circuit résonnant parallèle et déterminer sa valeur limite de contact avec le conducteur (5b) par l'outil (2ra, 2rb),
- tourner le porte-outil (1r) par rapport au montage de circuit fixe,
- mesurer en continu au moins ce paramètre d'oscillation caractéristique ($\varphi$, Am, f) du circuit résonnant parallèle, en particulier l'angle de phase S4 et/ou le déphasage ($\varphi$) et comparer ces valeurs mesurées avec la ou les valeurs limites spécifiées par des mesures de référence pour détecter le contact avec le conducteur (5b) par l'outil (2ra, 2rb).

8. Procédé selon la revendication 7, **caractérisé en ce que** lorsque la valeur limite est atteinte, un signal est délivré, dans lequel au moins une fonction du dispositif est avantageusement commandée avec le signal.

9. Procédé selon la revendication 7 ou 8, **caractérisé en ce que** le montage de circuit (7) évalue l'angle de phase (S4) et/ou le déphasage ($\varphi$) entre le signal du circuit résonnant côté stator (U2s) et le signal du générateur de fréquence. (U1).

10. Procédé selon la revendication 7 à 9, **caractérisé en ce que** le moment de contact du conducteur (5b) par l'outil (2r) et la durée du contact du conducteur (5b) sont détectées par l'outil (2r) notamment comme un paramètre distinct et de préférence en fonction de ces paramètres le conducteur électrique usiné est catégorisé et/ou **que** l'emplacement du contact du conducteur (5b) par l'outil (2r) dans la direction de l'axe de rotation (X) est enregistré en particulier comme paramètre séparé et que le conducteur électrique traité respectif est de préférence catégorisé en fonction de ces paramètres.

11. Procédé selon les revendications 7 à 10, **caractérisé en ce que** la position de l'outil est enregistrée en continu et pour le moment de contact du conducteur (5b) par l'outil (2r) en utilisant l'ouverture de lame correspondante le diamètre du câble est déterminé et/ou ;
**en ce que** la position angulaire ($\alpha$m) du ou des outils surveillés (2ra, 2rb) par rapport à l'axe de rotation (X) est enregistrée, notamment en continu.

12. Procédé selon la revendication 11, **caractérisé en ce qu'**une distance de l'outil (2ra) à l'axe de rotation (X) est réduite jusqu'à ce qu'un premier point de contact tangent du conducteur (5b) par l'outil (2ra) se produise et la position angulaire ($\alpha$m1) de l'outil (2ra) ainsi que la position de l'outil (2ra) sont mémorisées, dans lequel la position de l'outil (2ra) correspond à un premier rayon de contact associé (Rm1, r1), dans lequel de préférence une distance de l'outil (2ra) à l'axe de rotation (X) est davantage réduite jusqu'à ce que le conducteur (5b) soit continuellement touché par l'outil (2ra) pendant un tour complet de l'outil (2ra) autour du conducteur et la position du l'outil (2ra) est mémorisée comme deuxième rayon de contact (Rm2).

13. Procédé selon la revendication 12, **caractérisé en ce qu'**un vecteur d'excentricité (V) est calculé à partir du premier rayon de contact (Rm1) et du deuxième rayon de contact (Rm2) et de la position angulaire ($\alpha$m1).

14. Procédé selon la revendication 11, **caractérisé en ce qu'**une distance de l'outil (2ra) à l'axe de rotation (X) est réduite jusqu'à ce qu'un premier point de contact tangent du conducteur (5b) se produise à travers l'outil (2ra) et ceci alors que le premier rayon de contact (Rm1, r1) est mémorisé et que la distance de l'outil (2ra) à l'axe de rotation (X) est également réduite à un rayon de faucille (r2) jusqu'à ce que le conducteur (5b) soit touché par l'outil (2ra) sur une circonférence de préférence de 120° à 200°, dans lequel le début du contact est mémorisé comme premier angle de contact faucille ($\delta$) et la fin du contact est mémorisée comme dernier angle de contact en faucille ($\varepsilon$), et que de préférence un rayon conducteur (rL) et/ou une excentricité (e) et/ou un vecteur d'excentricité (V) calculé à partir du premier rayon de contact (r1), du rayon en faucille (r2), du premier angle de contact en faucille ($\delta$) et du dernier angle de contact en faucille ($\varepsilon$).

**15.** Procédé selon la revendication 13 ou 14, **caractérisé en ce que** le conducteur (5b) est déplacé par rapport à l'axe de rotation (X) sur la base du vecteur d'excentricité (V) de manière à compenser une excentricité.

**16.** Procédé selon une quelconque des revendications 11 à 15, **caractérisé en ce que** le conducteur électrique (5b) est une couche électriquement conductrice d'un câble coaxial ou câble triaxial, en répétant les étapes pour les couches individuelles du câble coaxial ou triaxial, en déterminant ainsi les diamètres et/ou les vecteurs d'excentricité (V) des couches conductrices individuelles.

**17.** Procédé selon les revendications 10 à 16, **caractérisé en ce que** par outil (2ra, 2rb), le moment de contact du conducteur (5b) par l'outil (2ra, 2rb) et la durée du contact du conducteur (5b) par l'outil (2ra, 2rb) sont enregistrés séparément.

**18.** Procédé selon la revendication 17 et la revendication 12, **caractérisé en ce que** le diamètre de contact respectif (Rm1) est calculé pour chaque outil (2ra, 2rb), de sorte que les outils (2ra, 2rb) soient ajustés radialement par rapport à l'axe de rotation (X) de sorte que chaque outil (2ra, 2rb) ait la même distance à l'axe de rotation (X).

FIG 1

FIG 2

FIG 2b

FIG 3

FIG 4

FIG 5

FIG 6a          FIG 6b          FIG 6c

FIG 7a

FIG 7b

FIG 7c

FIG 7d

FIG 8a

FIG 8b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3163696 A1
- WO 2014147596 A1
- EP 3121918 A1